# EUROPÄISCHE PATENTSCHRIFT

(11) **EP 1 527 554 B1**
(45) Veröffentlichungstag und Bekanntmachung des Hinweises auf die Patenterteilung: **31.12.2014**
(21) Anmeldenummer: 03766412.5
(22) Anmeldetag: 29.07.2003
(51) Int. Cl.: H04L 12/24, G05B 19/418, H04L 12/413

(54) **RECHNERNETZWERK MIT DIAGNOSERECHNERKNOTEN**
COMPUTER NETWORK WITH DIAGNOSIS COMPUTER NODES
RESEAU INFORMATIQUE COMPORTANT DES NOEUDS INFORMATIQUES DE DIAGNOSTIC

(30) Priorität: 29.07.2002 DE 10234634
(43) Veröffentlichungstag der Anmeldung: 04.05.2005
(73) Patentinhaber: Baumüller Anlagen-Systemtechnik GmbH & Co. KG, 90482 Nürnberg (DE)
(72) Erfinder: MEIS, Harold, 90559 Burgthann (DE); TSCHAFTARY, Thomas, 90408 Nürnberg (DE)
(74) Vertreter: Götz, Georg Alois
(86) Internationale Anmeldenummer: PCT/EP2003/050349
(87) Internationale Veröffentlichungsnummer: WO 2004/014022

(56) Entgegenhaltungen:
- WO-A-00/79758
- WO-A-01/67196
- DE-A- 19 614 748
- BARELMANN D ET AL: "UEBER INTERNET: PROZESSE BEOBACHTEN UND ANLAGENBERICHTE LESEN" ELEKTROTECHNISCHE ZEITSCHRIFT - ETZ, VDE VERLAG GMBH. BERLIN, DE, Bd. 118, Nr. 20, 1. Oktober 1997 (1997-10-01), Seiten 16-17, XP000752206 ISSN: 0948-7387

## Beschreibung

Die Erfindung betrifft ein Rechnernetzwerk zur Konfiguration, Inbetriebnahme, Überwachung, Fehler-Diagnose und/oder -Analyse mehrerer technisch-physikalischer Prozesse. Solche können insbesondere elektrische Antriebsvorgänge sein, die unter der Steuerung, Regelung und/oder Überwachung durch mehrere Prozessrechnerknoten (im Beispiel eines elektrischen Antriebssystems: Antriebsregler) ablaufen. Die Prozessrechnerknoten sind über wenigstens ein gemeinsames Kommunikationssystem mit wenigstens einem Diagnoserechnerknoten verbunden. In letzterem sind ein oder mehrere Konfigurations-, Überwachungs-, Diagnosedienste oder -funktionen implementiert, die den Prozessen und/oder den Prozessrechnerknoten und/oder den darin ablaufenden Datenverarbeitungsprozessen zugeordnet sind.

Ferner betrifft die Erfindung einen Diagnoserechnerknoten für das genannte Netzwerk. Dieser ist als Server mit Schnittstellen für wenigstens eine Datenbank sowie zur Kommunikation mit wenigstens den Prozessrechnerknoten und mit sonstigen Client-Rechnerknoten ausgebildet. Weiter betrifft die Erfindung einen Kommunikationsrechnerknoten oder ein Kommunikationsmodul, letzteres als Software- und/oder Firmwaremodul ausgebildet, welche jeweils zum Einsatz in das genannte Netzwerk geeignet sind.

Aus einem zusammenfassenden Tagungsband zu dem im November 2001 in Nürnberg stattgefundenen Kongreß "SPS IPC-Drives" ist der Fachartikel "Info-Portal für anlagenübergreifende Prozessvisualisierung und -management via Internet" (Autoren: Andreas Kitzler und Werner Feiten) bekannt. Darin wird eine Kommunikationsstruktur vorgeschlagen, bei welcher mehrere, voneinander unabhängige Automatisierungssysteme, -zellen oder -anlagen über ein Informationsportal kombinierbar, überwachbar, visualisierbar und dergleichen sind. Auf das Informationsportal lässt sich über das Internet zugreifen. Die Kommunikation zwischen den Automatisierungszellen (sog. Supervisory Control And Data Acquisition - SCADA) einerseits und dem zentralen Webserver des Informationsportals andererseits erfolgt über Standard-Schnittstellen auf der Basis der erweiterbaren Auszeichnungssprache XML. Dazu ist jedes Automatisierungssystem mit einem sogenannten XML-Agenten zur Kommunikation mit dem Informationsportal auf der Basis von TCP-IP versehen. So soll ein Management über das Web verschiedene Automatisierungszellen bzw. SCADA-Systeme qualifiziert auswerten können. Allerdings müssen die einzelnen Sensordaten, bevor sie vom Informationsportal über das Web transportiert werden können, zunächst auf der für sie spezifischen Ebene gesammelt, dort aufbereitet und dem Informationsportal über die XML-Agenten zur Verfügung gestellt werden.

Aus DE 196 14 748 (A1-Offenlegungsschrift und C2-Patentschrift) ist ein Fehlerdiagnosesystem bekannt, bei welchem ein Diagnoserechnerknoten über mehrere Bussysteme auch auf der Basis des Kommunikationsprotokolls TCP/IP (Transport Control Protocol/Interface Program) mit Leitstandrechner, Steuerprozessrechner und Feldprozessrechnern kommuniziert. Zur Kommunikation zwischen den Feldprozessrechnern einerseits und dem Diagnoserechnerknoten andererseits wird ein serieller Feldbus nach dem Standard RS485 eingesetzt, wobei der Diagnoserechnerknoten den seriellen Feldbus (RS485) entsprechend dem Master/Slave-Prinzip dominiert. Die Bandbreite für die Datenübertragung (RS485 Schnittstellen) reicht bei der zunehmenden Datenflut nicht aus. Die auf der Bedienoberfläche darzustellenden Informationen können aufgrund der Ring-Kommunikationsstruktur innerhalb eines Feldprozessrechner-Clusters nicht schnell genug übertragen werden. Die Abfrage eines Parameters dauert etwa 50 -60 ms - bei Anlagen mit ca. 500 Antrieben würde z.B. ein anstehender Fehler erst nach mehr als einer Minute angezeigt werden. Jeder Parameter wird einzeln übertragen, die Übertragung von Software-Paketen ist nicht möglich.

Aus der WO 01/67196 A1 ist ein Betriebsnetzwerksystem bekannt, mit zumindest einem Netzwerkrechner, der mit einer Anzahl von Vor-Ort-Steuereinrichtungen im Bereich von Montagelinien, Arbeitsstationen oder dergleichen verbunden ist, welchen Vor-Ort Steuereinrichtungen Feldgeräte zugeordnet sind. Zwischen Netzwerkrechner und Vor-Ort Steuereinrichtungen erfolgt ein Datenaustausch von Betriebsdaten und Steuerungsdaten. Der Netzwerkrechner dient zur Datererfassung, -verwaltung und/oder -auswertung. Im Netzwerk wird das TCP/IP-Protokoll verwendet. Die Verbindung zwischen Netzwerksystem und entsprechenden Einrichtungen der Montagelinie erfolgt über Ethernet und mittels TCP/IP.

Ziel der vorliegenden Erfinder ist es, ein Hard- und insbesondere Softwarewerkzeug zur Diagnose komplexer technischer Anlagen und Systeme zu entwickeln, das auf die Anforderungen und Bedürfnisse der Benutzer zugeschnitten ist und vor allem folgenden Anforderungen genügt:
(1) Flexible Funktionen zur Überwachung und Diagnose großer Antriebssysteme:
   Ziel der Erfindung ist die Entwicklung eines Hard- und insbesondere Softwarewerkzeugs zur Überwachung und Diagnose von insbesondere großen Antriebssystemen. Das Diagnosesystem soll umfangreiche, flexible Funktionen bieten, die auf die z.T. sehr unterschiedlichen Bedürfnisse der verschiedenen Benutzergruppen beim Kunden zugeschnitten sind.
(2) Einfach zu bedienende, übersichtliche Bedienoberflächen:
   Die Bedienoberfläche des Diagnosesystems ist der einzige Teil der Software, mit der der Kunde in Kontakt kommt. Insofern ist sie das "Aushängeschild" der Software und für deren Akzeptanz und Beurteilung von Seiten des Kunden entscheidend. Beim Entwurf der Bedienoberfläche ist darauf zu achten, dass sie auch für wenig geschultes Personal leicht zu bedienen ist. Die Vielzahl der bei der Diagnose von großen Anlagen anzuzeigenden Informationen muß graphisch aufbereitet werden und in einer ergonomischen Darstellung dem Anwender präsentiert werden.
(3) Verkürzung der zur Auffindung eines eventuellen Fehlers notwendigen Zeit:
   Der Nutzen des Diagnosesystems soll für den Kunden darin liegen, dass er sofort nach dem Auftreten eines Fehlers im Antriebsystem die für die Auffindung und Behebung des Fehlers notwendigen Informationen präsentiert bekommt. Hierdurch kann die Zeit in der die Anlage nicht produktiv ist, reduziert werden.
(4) Situationsabhängige Darstellung von Diagnose-Informationen
   Das Diagnosesystem soll die richtige Information zum richtigen Zeitpunkt am richtigen Ort zur Verfügung stellen:
   - Aufbereitung der Diagnose-Information gemäß den Anforderungen des jeweiligen Benutzerkreises (z.B. Anlagenbediener, Techniker, Inbetriebnehmer) (→ die richtige Information)
   - Zeitnahe Anzeige von Diagnose-Informationen direkt nach Auftreten eines Fehlers (→ zum richtigen Zeitpunkt)
   - Zugriff auf DAS DIAGNOSESYSTEM von beliebigen PCs des Kunden ohne Installationsaufwand - sowohl im lokalen Kundennetz als auch über Fernzugriff. (→ am richtigen Ort)
(5) Reduzierung von kritischen Anlagenzuständen durch vorbeugende Wartung und ständige Überwachung der Anlage:
   Zukünftig soll das Diagnosesystem Mechanismen beinhalten, die dazu beitragen, eventuell bevorstehende Ausfälle von Geräten vorab zu erkennen und dem Kunden mitzuteilen. So kann die Zuverlässigkeit des Antriebsystems weiter erhöht werden.
(6) Umfassende Diagnose- / Messfunktionen via schneller Ethernet-Schnittstelle unter Einbeziehung des Ethernet-Gesamtkonzeptes der Maschine um z.B. ein Referenzsignal einer realen Leitachse zu messen, aufzuzeichnen und auszuwerten
(7) Vorbeugende Diagnose (z.B. Geberausfall in ... Tagen wahrscheinlich)
(8) Ein "Expertensystem" soll Fehlerlokalisierung innerhalb max. 10 min sicherstellen und Fehlerbehebung wesentlich vereinfachen
(9) Webbrowser-Funktionen
(10) Das Diagnosesystem muss auf mehreren Plattformen laufen können (z.B. diverse Leitstände)
(11) Integrierte Datenprotokollierung / -analyse (Registerwerte, Kommandos) muss ohne zusätzliche Hardware (Datenanalyzer) verfügbar sein
(12) Zyklische Datenprotokollierung auf zentralen Datenbankserver
(13) Zugriffsmöglichkeit für den Maschinenhersteller auf ausgelieferte Antriebssysteme per Ferndiagnose
(14) Bedienerführung und Parameterhandling (Konfiguration, Inbetriebnahme, Fehlersuche, Software-Updates) sind wesentlich zu verbessern
(15) Entwicklung von branchenübergreifenden Lösungen
   Trotz Berücksichtigung der Kundenwünsche soll das Diagnosesystem für den branchenübergreifenden Einsatz entwickelt werden, so dass ein Einsatz in anderen Branchen (z.B. Werkzeugmaschinen, Textilmaschinen) ohne großen Aufwand möglich ist.
(16) Bereitstellung der Softwarewerkzeuge für die Inbetriebnahme von Antriebssystemen mit zukünftig bis zu 500 Achsen
   Antriebssysteme mit mehr als 300 Achsen sind ohne Softwareunterstützung nur noch mit unverhältnismäßig hohem Aufwand in Betrieb zu nehmen. Hierfür soll mit dem Diagnosesystem ein geeignetes Softwarewerkzeug entwickelt werden.
(17) Verkürzung der Inbetriebnahmezeit und Reduzierung der Inbetriebnahmekosten:
   Mit Hilfe des Diagnosesystems sollen die Kosten für die Inbetriebnahme durch die Bereitstellung geeigneter softwaregestützter Verfahren langfristig reduziert werden.
(18) Weltweiter Zugriff auf den oder die technisch-physikalischen Prozesse der Anlage, insbesondere Antriebssystem, zur schnellen und kostengünstigen Diagnose:
   Für einen schnellen und zuverlässigen Service und zur Anlagendiagnose soll ein weltweiter Zugriff auf das Antriebssystem möglich sein.

Dem gegenüber wird zur Vermeidung sich aus dem Stand der Technik ergebender Nachteile bei dem Rechner-Netzwerk mit den eingangs genannten Merkmalen erfindungsgemäß vorgeschlagen, dass das gemeinsame Kommunikationssystem zwischen dem Prozessrechnerknoten und dem Diagnoserechnerknoten mit dem Ethernet oder einem sonstigen, asynchron und/oder mit einem stochastischen Zugriffsverfahren arbeitenden Bus- oder Kommunikationssystem realisiert wird. Ein derartiges Zugriffsverfahren ist beispielsweise unter der Abkürzung "CSMA/CD" (Carrier Sense Multiple Access/with Collision Detection) bekannt. Dieser industrielle Ethernet-Einsatz zur Realisierung einer Kommunikations-Infrastruktur ermöglicht im Vergleich zur vorbekannten Kommunikation über RS485 und dem zugehörigen USS-Protokoll eine höhere Bandbreite für die Datenübertragung, so dass größere Datenmengen von dem Prozessrechnerknoten zum Diagnoserechnerknoten übermittelt werden können. Hierfür besteht aufgrund der zunehmenden Komplexität der technischen Anlagen mit wachsender Anzahl von Prozessrechnerknoten und zugehörigen technisch-physikalischen Prozessen ein zunehmendes Bedürfnis. Weiterhin hat sich das Ethernet im Bürobereich als weitgehender Standard für die Übertragung großer Datenmengen durchgesetzt. Durch die erfindungsgemäße Verwendung von Ethernet mit dem ebenfalls an sich bekannten Protokoll TCP/IP ist für das erfindungsgemäße Diagnosesystem der Weg zur Kompatibilität und/oder Verbindung mit dem Internet geebnet. Damit wird der Vorteil erzielt, dass Diagnosedaten über das Internet verschickt werden können. Zudem kann eine technische Anlage mit einer Vielzahl von Prozessen von einem beliebigen Client-Knoten aus insbesondere über das Internet überwacht werden.

Um die umfangreich anfallenden Datenmengen sinnvoll verarbeiten zu können, ist eine dezentrale Diagnose nebst Vorverarbeitung zweckmäßig. Ebenfalls sinnvoll ist es, umfangreiche Diagnosefunktionen möglichst nahe an den betroffenen, technisch-physikalischen Prozess oder Gerät anzusiedeln. In dieser Hinsicht ist dem Ethernet oder dem sonstigen Bus- oder Kommunikationssystem und wenigstens einem der Prozessrechnerknoten ein Kommunikationsmodul oder gemäß der Erfindung ein Kommunikationsrechnerknoten zwischengeschaltet, das bzw. der den jeweiligen Prozessrechnerknoten an das Internet oder sonstige Bus- oder Kommunikationssystem anbindet. Der Kommunikationsrechnerknoten oder das Kommunikationsmodul kann zusätzlich auch noch die ereignis- und/oder anfragebasierte Kommunikation zum Diagnoserechnerknoten übernehmen.

Insbesondere wenn in weiterer Ausgestaltung der Erfindung das Kommunikationsmodul oder der Kommunikationsrechnerknoten so ausgebildet ist, dass es bzw. er über XML-Protokolle und/oder als XML-basierte Schnittstelle mit dem Diagnoserechnerknoten kommuniziert (XML: Extensible Markup Language), kann bei der Projektierung und Konfiguration der damit zu überwachenden, technischen Anlage sehr flexibel und mit verhältnismäßig geringem Aufwand auf technische Anforderungen und Kundenwünsche reagiert werden. Auf der Basis der Erfindung läßt sich eine standardisierte, flexible Netzwerk-Rechnerstruktur schaffen, die leicht um weitere Funktionen erweitert werden kann. Vor allem lassen sich mit dem Einsatz der XML-Protokolle und/oder der XML-basierten Schnittstellen die Diagnosedaten aus dem Prozessrechner- und/oder Kommunikationsknoten für den Diagnoserechnerknoten bereits so aufbereiten, dass diese vom Diagnoserechnerknoten leicht über das Internet an Client-Rechnerknoten übertragen werden können.

Um die umfangreichen Datenmengen über eine dezentrale Vorverarbeitung sinnvoll bewältigen zu können, ist nach einer Ausbildung der Erfindung vorgesehen, dass das Kommunikationsmodul oder der Kommunikationsrechnerknoten mit Funktionalitäten zur Fehlersuche oder Diagnose im Bereich wenigstens eines der Prozessrechnerknoten oder eines technisch-physikalischen Prozesses versehen ist. Mit diesem Konzept lassen sich umfangreiche Diagnosefunktionen nahe an den betroffenen Komponenten ansiedeln.

Der Internet-Kompatibilität des erfindungsgemäßen Diagnosesystems dient es, wenn nach einer Erfindungsausbildung der Diagnoserechnerknoten zur Bereitstellung oder wenigstens Unterstützung webbasierter Bedienoberflächen für Client-Rechnerknoten ausgebildet ist. Dies kann über Datenfernübertragung und/oder ein Weitverkehrsnetz (z. B. Internet) erfolgen. Ferner liegt es im Rahmen der Erfindung, wenn dazu der Diagnoserechnerknoten mit Funktionskomponenten versehen ist, welche die Bildung der Bedienoberflächen in den Client-Rechnerknoten unterstützen.

Problematisch ist, ob der Benutzer an einem Client-Rechnerknoten sich sicher sein darf, dass die Client-Benutzeroberfläche (Diagnose-) Daten und -Informationen wiedergibt, die noch weitgehend aktuell bzw. zeitnah sind. Ein etwaiger Ausfall des Diagnoseservers soll erkennbar sein, und ferner sollen Fehler und sonstige Ereignisse im technisch-physikalischen Prozess und/oder Prozessrechnerknoten zeitnah dem Benutzer über die Bedienoberfläche des ihm zugeordneten Client-Rechnerknotens mitgeteilt werden können.

Zur Lösung dieser Problematik wird im Rahmen der allgemeinen erfinderischen Idee ein zum Einsatz als Server in das soeben skizzierte Netzwerk ausgebildeter Diagnoserechnerknoten mit folgenden Merkmalen vorgeschlagen:
▪ der Diagnoserechnerknoten ist zur Arbeit als Server eingerichtet und besitzt Schnittstellen zu wenigstens einer Datenbank, zur Kommunikation mit den Kommunikations- und/oder Prozessrechnerknoten und zur Kommunikation mit sonstigen Client-Rechnerknoten;
▪ die eine oder mehreren Schnittstellen zu den sonstigen Client-Rechnerknoten sind unter Verwendung eines (an sich bekannten) Servlet-Containers realisiert, welcher der Übertragung von Diagnosedaten an die Clientknoten dient;
▪ diese Diagnosedaten sind aus den Schnittstellen erhältlich, die der Kommunikation mit dem Kommunikations- und/oder Prozessrechnerknoten dienen;
▪ die eine oder mehreren genannten Schnittstellen, welche den Kommunikations- und/oder Prozessrechnerknoten zugeordnet sind, sind auf der Basis des Ethernet realisiert;
▪ es ist ein Diagnosekanal gebildet, der eine oder mehrere Ethernet-Schnittstellen umfasst, die den Kommunikations- und/oder Prozessrechnerknoten zugeordnet sind;
▪ der Diagnosekanal umfasst ferner ein Ereignis-Managementmodul, das auf die Datenbank zugreifen sowie an den Ethernet-Schnittstellen erhaltene Diagnosedaten verarbeiten kann;
▪ ferner umfasst der Diagnosekanal ein Ereignis-Überwachungsmodul, das auf der Basis des Servlet-Containers gebildet ist und Ausgangsdaten aus dem Ereignis-Managementmodul einem oder mehreren Applets auf externen Client-Rechnerknoten zur Verfügung stellt.

Damit ist es möglich, Daten, insbesondere Diagnosedaten, zwischen dem Diagnoserechnerknoten und der Benutzeroberfläche eines Client-Rechnerknotens zyklisch übertragen zu können. So kann ein Benutzer am Client-Rechnerknoten zeitnah über im Bereich der Prozessrechnerknoten und/oder der technisch-physikalischen Prozesse auftretende Ereignisse informiert werden. Dem Benutzer können in vielfältiger und komfortabler Weise so Anlageinformationen auf der Benutzeroberfläche des Client-Rechnerknotens zur Verfügung gestellt werden. Die Datenübertragung lässt sich besonders vorteilhaft mit Java-Technologien realisieren, nämlich einem Java-Servlet auf dem Diagnoserechnerknoten als Server und einem Java-Applet beim Client-Rechnerknoten. So ist es auch möglich, einen Benutzer am Client-Rechnerknoten Diagnoseinformationen in Form von Webseiten zur Verfügung zu stellen. Dabei bietet der Einsatz von Java-Applets sehr flexible Darstellungsmöglichkeiten, die durch den Zukauf von Applets mit grafischen Fähigkeiten leicht erweiterbar sind.

Der Lösung der obigen Problematik dient der erfindungsgemäße Diagnosekanal im Diagnoseserver, mittels welchem eine zyklische Kommunikation realisiert werden kann, wobei regelmäßig Datenpakete ausgetauscht werden. Fehlt ein Datenpaket, kann im Client-Rechnerknoten erkannt werden, dass ein Fehlerfall aufgetreten ist ("Event + Heartbeat"). Der Heartbeat bzw. Herzschlag entspricht gleichsam der vor allem in der Eisenbahn-Sicherheitstechnik bekannten Totmannstaste. Mittels des Diagnosekanals lässt sich also eine Anzeige von vom Prozessrechnerknoten herrührenden Diagnosedaten über den Diagnoseserver bzw. Diagnoserechnerknoten zum Client-Rechnerknoten auf dessen Bedienoberfläche gleichsam triggern. Die Darstellung des Fehlerfalls auf der Benutzeroberfläche ist aufgrund des erfindungsgemäßen Diagnosekanals nicht mehr davon abhängig, dass vom Client-Rechnerknoten eine Anfrage zum Diagnoseserver übermittelt wird. Vielmehr können die Prozessrechnerknoten, gegebenenfalls über jeweils eigens zugeordnete Kommunikationsknoten, gleichsam selbst die Darstellung neuer Ereignisse, insbesondere Fehler, indizieren. Dieser Mechanismus wird wesentlich durch den Diagnosekanal im Diagnoserechnerknoten unterstützt, indem über das Ereignis-Überwachungsmodul vom Prozessrechnerknoten mitgeteilte Diagnose- bzw. Fehlerdaten an die Bedienoberfläche des Client-Rechnerknotens für einen dortigen Benutzer weitergeleitet werden.

Gemäß einer besonderen Ausbildung sind die Schnittstellen im Diagnoserechnerknoten für Kommunikation mit den Kommunikations- und/oder Prozessrechnerknoten mittels XML-Protokolle bewerkstelligt. Dadurch lassen sich in der Flexibilität eingeschränkte, proprietäre Lösungen vermeiden.

Im Diagnoserechnerknoten sollen alle Diagnoseinformationen den Benutzeroberflächen auf den Client-Rechnerknoten webbasiert zur Verfügung gestellt werden. Als besonders zweckmäßig dafür stellte sich eine Kombination des Webservers Appache mit der Servlet-Engine "Tomcat" heraus.

Bei dem oben angegebenen, erfindungsgemäßen Diagnoserechnerknoten sorgt der Diagnosekanal dafür, im Ereignis-, insbesondere Fehlerfall den Client-Rechnerknoten darauf mit seiner Benutzeroberfläche zur Reaktion zu bringen. Tritt ein Fehler oder ein Ereignis auf, werden entsprechende Diagnosedaten an der Ethernet-Schnittstelle des Diagnosekanals erfasst, welche den Kommunikationsmodulen, Kommunikations-und/oder Prozessrechnerknoten zugeordnet sind. Auf die Diagnose- bzw. Ereignisdaten in Form beispielsweise eines Telegramms an der Ethernet-Schnittstelle kann das Ereignis-Managementmodul zugreifen. Die Ereignis- bzw. Diagnosedaten werden verarbeitet und eine entsprechende Information in die Datenbank geschrieben. Die Ausgangsdaten aus dem Ereignis-Managementmodul gelangen zu dem im Servlet-Container angelegten Ereignis-Überwachungsmodul. Dieser übermittelt an seinem Ausgang eine Information im Beispielsfall des Intranets zweckmäßig direkt, ohne Zwischenschaltung eines Webservers, an einen Client-Rechnerknoten. Die Information beinhaltet eine Aufforderung, beim Diagnoseserver wegen Ereignisse oder Fehler repräsentierende Diagnosedaten nachzufragen. Damit wird die Notwendigkeit eines ständigen, den gesamten Betrieb über andauernden Pollings, was erhöhte Datenübertragungskapazitäten erfordern würde, vermieden.

Zur Anbindung der Prozessrechnerknoten an das Ethernet oder ein sonstiges, asynchron arbeitendes Kommunikationssystem mit dem Diagnoserechnerknoten, und insbesondere zur Schaffung der Möglichkeit einer ereignisbasierten Kommunikation zwischen Prozessrechnerknoten und Diagnoserechnerknoten, wobei umfangreiche Diagnosefunktionen möglichst nahe zum technisch-physikalischen Prozess verlagert werden, wird im Rahmen der allgemeinen erfinderischen Idee ein Kommunikationsrechnerknoten oder ein Kommunikationsmodul als Software- und/oder Firmwaremodul vorgeschlagen, der zur Verwendung im oben skizzierten Rechner-Netzwerk geeignet ist und sich durch folgende Merkmale auszeichnet:
▪ der Kommunikationsrechnerknoten oder das Kommunikationsmodul weisen eine erste Schnittstelle auf, die dem wenigstens einen Diagnoserechnerknoten zugeordnet ist;
▪ diese Schnittstelle ist zur Kommunikation über Protokolle der TCP/IP-Familie, einschließlich UDP/IP, vorzugsweise auf der Basis des Ethernet programmiert oder ausgebildet;
▪ der Kommunikationsrechnerknoten bzw. das Kommunikationsmodul weisen eine oder mehrere zweite Schnittstellen auf, die einem oder mehreren der Prozessrechnerknoten zugeordnet sind,
▪ die erste und die eine oder mehreren zweiten Schnittstellen sind miteinander über einen oder mehrere Informationsbroker koppelbar;
▪ der eine oder die mehreren Informationsbroker sind jeweils programm- und/oder schaltungstechnisch als Submodule für bidirektionale, anfrage- und/oder ereignisbasierte Datenkommunikation eingerichtet, die zwischen der ersten und der einen oder den mehreren zweiten Schnittstellen stattfindet.

Zweck des Kommunikationsmoduls bzw. Kommunikationsrechnerknotens ist es, sämtliche Kommunikationsaufgaben zwischen dem Prozessrechnerknoten und dessen Außenwelt abzuwickeln. Hierzu gehört z. B. der Zugriff auf Parameter des Prozessrechnerknotens, beispielsweise Antriebsreglers, der Down- und Upload von beispielsweise Regler-Firmware und zugehöriger Datensätze, sowie die Bereitstellung von Diagnosefunktionalitäten.

Im Hinblick auf die Realisierung der Hardware des erfindungsgemäßen Kommunikationsknotens könnte es zweckmäßig sein, eine eigenständige Baueinheit mit darin integrierten Kommunikationsfunktionen zu fertigen und auf die Platine für den Prozessrechnerknoten aufzustecken. Gemäß der Erfindung ist daher der Kommunikationsrechnerknoten als Zusatz-Baukomponente für den jeweiligen Prozessrechnerknoten ausgebildet. Alternativ kann die Kommunikationsknoten-Hardware ganz oder teilweise in die Schaltung auf der Platine des Prozessrechnerknotens und/oder der des Diagnoserechnerknotens integriert sein. Alternativ liegt es auch im Rahmen der Erfindung, den Kommunikationsknoten gleichsam als "PC" mit einem eigenen Gehäuse auszuführen, das auf eine Schienenhalterung für den Prozessrechnerknoten mit aufgeschnappt werden kann.

Als Betriebssystem für den erfindungsgemäßen Kommunikationsknoten (Kommunikationsmodul oder Kommunikationsrechnerknoten) hat sich der Einsatz von Linux als zweckmäßig erwiesen, was Lizenzkosten für die Entwicklungsumgebung entfallen lässt. Zudem ist C⁺⁺ als ausreichend flexible und mächtige Programmiersprache geeignet.

Mit der erfindungsgemäßen Konzeption des Kommunikationsknotens zwischen Prozessrechner und Diagnoserechner ergibt sich die Möglichkeit für die Übertragung der Daten an die Außenwelt über XML-basierte Protokolle (anstelle von proprietären Protokollen). Mit der an sich bekannten und weit verbreiteten Auszeichnungssprache XML für Internetanwendungen in Verbindung mit der Bereitstellung plattformunabhängiger XML-Parser ergibt sich ferner die Möglichkeit, auch in heterogenen Systemumgebungen einfach Daten auszutauschen. Durch bereits vorhandene Validierungsmechanismen (XML-Schema) können die Struktur und der zulässige Inhalt eines Telegramms einfach festgelegt werden, wobei die Prüfung auf Gültigkeit automatisch erfolgt. Als zeichenorientiertes Protokoll ist ein XML-basiertes Telegramm einfach zu erzeugen und notfalls auch von Hand oder von einfachen Skripten zu bearbeiten.

Um möglichst umfangreiche Diagnosefunktionen möglichst nahe am technisch-physikalischen Prozess implementieren zu können, wird gemäß einer vorteilhaften Erfindungsausbildung vorgeschlagen, dass der eine oder die mehreren Informationsbroker Funktionskomponenten umfassen, die zur Fehlersuche oder Diagnose im Bereich der Prozessrechnerknoten und/oder technisch-physikalischen Prozesse ausgebildet sind. Vor allem in diesem Zusammenhang ist die weitere Erfindungsausbildung vorteilhaft, auf dem Kommunikationsrechnerknoten oder -modul einen Interpreter für die Ablauffähigkeit von an sich bekannten Skripten einzurichten, die zum Zugriff auf Funktionselemente beziehungsweise Funktionalitäten in dem oder den Informationsbrokern zwecks Ausführung von Überwachungs- und Diagnosefunktionen ausgebildet sind. Ein damit erzielbarer Vorteil besteht in der effektiveren Fehlersuche: Mittels der Skripten in Verbindung mit der Sprache Perl lassen sich in relativ einfacher Weise effiziente Fehlersuchbedingungen einrichten bzw. vom Diagnoserechnerknoten auf dem Kommunikationsknoten laden. Damit lässt sich die Funktionalität, die auf dem Kommunikationsknoten zur Verfügung steht, noch einmal erweitern.

Es liegt im Rahmen der Erfindung, dass das Kommunikationsmodul oder der Kommunikationsrechnerknoten in bestimmten Fällen dann als Server gegenüber dem Diagnoserechnerknoten (als Client) arbeitet, wenn seitens des Diagnoserechnerknotens Anforderungen an Informationsdienste vorliegen, die beispielsweise von Informationsbrokern im Kommunikationsknoten auszuführen sind.

Weitere Einzelheiten, Merkmale, Vorteile und Wirkungen auf der Basis der Erfindung ergeben sich aus der nachfolgenden Beschreibung bevorzugter beispielhafter Ausführungsformen der Erfindung und aus den Zeichnungen. Diese zeigen in:
Figur 1 ein schematisches Geräteschaubild des erfindungsgemäßen Diagnosesystems mit lokalem und weltweitem Zugriff auf Diagnoseinformationen;
Figur 2 eine schematische Block-Darstellung eines beispielhaften Kommunikationssystems eines mit dem erfindungsgemäßen Diagnosesystem versehenen, elektrischen Antriebssystems;
Figur 3 in schematischer Blockdarstellung die Grobstruktur des erfindungsgemäßen Diagnosesystems;

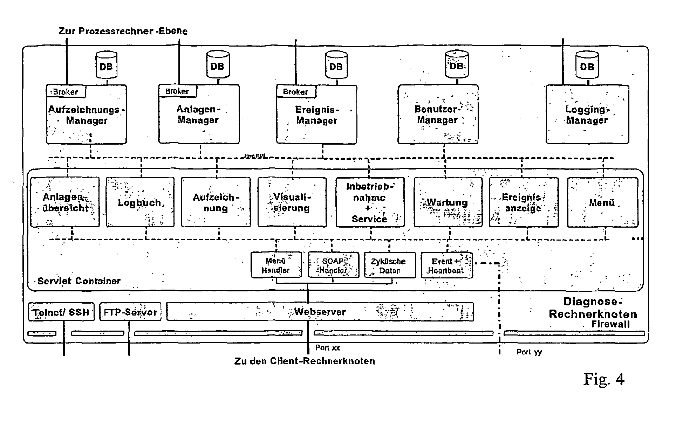

Figur 4 eine detaillierte Blockbild-Darstellung der internen Struktur des Diagnose-Rechnerknotens;
Figur 5 eine gleichartige Blockdarstellung der internen Struktur des Kommunikations-Rechnerknotens;
Figur 6 eine beispielhafte Bedienoberfläche auf einem Client-Rechnerknoten für ein anlagenorientiertes Anlagenbild am Beispiel einer Druckmaschine, erzeugt mittels eines Java-Applets in Verbindung mit einem korrespondierenden Servlet auf dem Diagnoserechnerknoten;
Figur 7 eine weitere, gleichartig erzeugte Bedienoberfläche über ein antriebssystem-orientiertes Anlagenbild am Beispiel einer Druckmaschine.

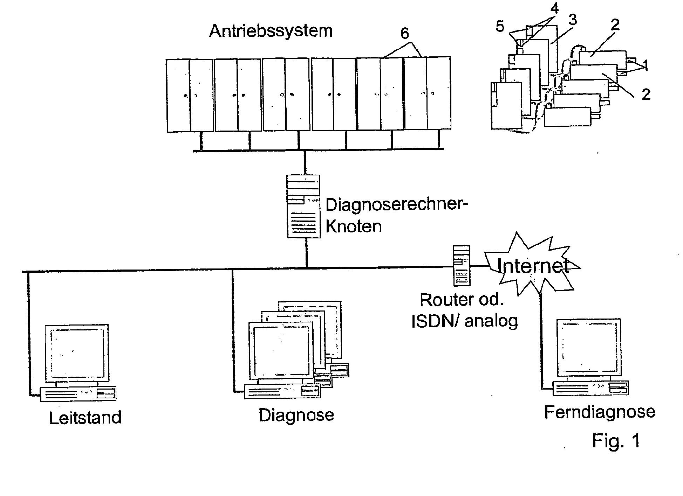

Gemäß Figur 1 ist ein elektrisches Antriebssystem für eine Vielzahl von zueinander synchron anzutreibenden Achsen 1 beispielsweise einer Druckmaschine mit einer Vielzahl von Elektromotoren 2 versehen, die jeweils eine Achse 1 antreiben. Die Elektromotoren 2 werden jeweils über Wechselrichter 3 mit vorgeschalteten Prozessrechnerknoten 4, im vorliegenden Druckmaschinen-Antriebssystem als Antriebsregler ausgeführt, angesteuert bzw. geregelt. Zur Kommunikation mit einem Diagnoserechner-Knoten sind den Prozessrechnerknoten jeweilige Kommunikationsrechnerknoten 5 vorgeschaltet. Der Wechselrichter 3, der Prozessrechnerknoten 4 und der Kommunikationsrechnerknoten 5 können baulich auf einer gemeinsamen Baugruppe, wie zeichnerisch dargestellt, integriert sein, welche in einem jeweiligen Schaltschrank 6 untergebracht ist.

Gemäß Figur 1 kann der Diagnoserechnerknoten auch mit einem Leitstand, mehreren Client-Rechnerknoten für Diagnose und über einen Internet-Router oder ISDN oder analog über das Internet mit einem oder mehreren, örtlich entfernten Client-Rechnerknoten zur Ferndiagnose kommunizieren. Damit sind die am jeweiligen Antriebsprozess der Elektromotoren 2 mittels des Prozessrechnerknotens 4 und/oder des Kommunikationas-Rechnerknotens 5 aufbereiteten Diagnosedaten über den Diagnoserechnerknoten sowohl lokal als auch von einem beliebigen Ort aus abrufbar.

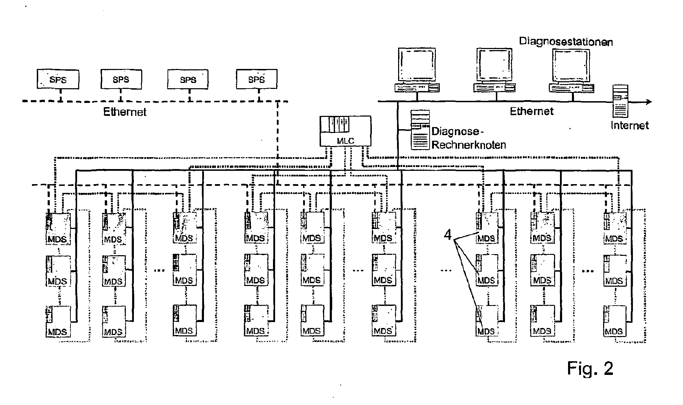

Gemäß Figur 2 sind die einzelnen Prozessrechnerknoten 4 im Rahmen einer Ringstruktur zur synchronisierten Kommunikation miteinander verbunden, wobei stets einer der Prozessrechnerknoten 4 (in Figur 2 der jeweils dunkler unterlegte) als Kommunikationsmaster arbeitet. Dieser besitzt gleichzeitig eine Schnittstelle zur asynchronen Kommunikation über das Ethernet mit mehreren Steuerungsrechnerknoten SPS. Um auch eine Querkommunikation zwischen einzelnen Ringen mit Prozessrechnerknoten 4 zu unterstützen, ist als Strukturelement noch ein Multi-Link-Controller MLC eingeführt (an sich bekannt aus US 2003/0100961 A1).

In der Leitebene werden ständig (Diagnose-) Informationen aus der Ebene der Prozessrechnerknoten 4 benötigt. Dabei handelt es sich im wesentlichen um Systeminformationen wie Status- und Fehlermeldungen, Wartungsinformationen sowie Aufzeichnungen zur Qualitätsüberwachung. Zur Auswertung der Daten steht in der Leitebene der in Figur 2 gezeichnete Diagnose-Rechnerknoten zur Verfügung. Auch hier wird das an sich bekannte Ethernet als Kommunikationsmedium sowohl zu den einzelnen Prozessrechnerknoten 4 als auch zu den Diagnosestationen in der Leitebene zur Verfügung gestellt, welche Client-Rechnerknoten mit Benutzeroberflächen bilden können. Das an sich bekannte OSI-Schichtenmodell ermöglicht komplexe Kommunikationsmechanismen zwischen Prozessrechner- und Leitebene. Da die Diagnose unabhängig von der restlichen Kommunikation erfolgen soll, ist jeder Prozessrechnerknoten 4 über das Ethernet vom Diagnoserechnerknoten (und umgekehrt) erreichbar. Damit wird u. a. der Vorteil erzielt, dass auch Kommunikationsprobleme im synchronisierten Ringbus der Prozessrechnerknoten untereinander erkannt werden können.

Definition wichtiger Begriffe:
- Ereignis: Ein Ereignis ist eine Information die von einem Antriebsregler (Prozessrechnerknoten am technisch-physikalischen Prozess) beim Auftreten an den Diagnose-Server (Diagnoserechnerknoten) gesendet wird. Es erscheint in der Ereignisanzeige der Bedienoberfläche und im Logbuch. Ereignisse sind z.B. Fehlermeldungen, Meldungen über den Start/ Stop von Aufzeichnungen, Wartungsmeldungen etc. Jedes Ereignis hat eine eindeutige Ereigniskennung über die eine Ereignisbeschreibung in der Dokumentation abgerufen werden kann.
- Aufzeichnung: Mit einer Aufzeichnung kann man beliebige Parameterverläufe von beliebigen Reglern erfassen und in einer Datenbank speichern.
- Überwachungsansicht: Die Überwachungsansicht ist eine graphische Darstellung eines oder mehrerer Parameter von einem oder mehrerer Regler. Sie dient dazu, den Werteverlauf dieser Parameter hinsichtlich Abweichungen von der Norm zu überwachen. (z.B. Überwachung der Motortemperatur)
- Parameterliste: Die Parameterliste enthält alle an einem Reglertyp vorhandenen Parameter
- Langzeitaufzeichnung: Eine Aufzeichnung, deren Daten auf dem Diagnoseserver in einer Datenbank gespeichert werden. Gegenteil zur Ringspeicheraufzeichnung
- Ringspeicheraufzeich- nung: Eine Aufzeichnung, deren Daten in einem Ringspeicher des Prozessrechnerknotens gespeichert werden. Erst nach Beenden der Aufzeichnung können die Daten auf dem Diagnose-Server gespeichert werden.
- Konfigurations-Wizard: Eine Abfolge von einzelnen Seiten auf denen der Benutzer Einstellungen vornehmen kann. Jeder Schritt in der Konfiguration umfasst eine Anzahl von Funktionen und wird auf einer Seite dargestellt. Je nachdem wie der Benutzer sich im vorherigen Schritt verhält, wird eine entsprechende Nachfolgeseite angezeigt. (z.B. bei Konfiguration der Aufzeichnung: Auswahlmöglichkeit im Schritt 1: Ringspeicher oder Langzeitaufzeichnung: Je nach Auswahl bekommt der Anwender Seiten für die Konfiguration des Ringspeichers oder der Langzeitaufzeichnung angezeigt.)

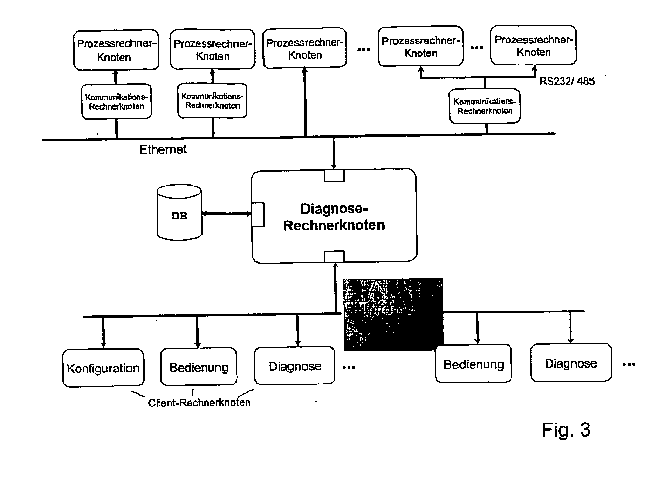

Figur 3 gibt einen Überblick über die Grobstruktur des Diagnosesystems. Dem Anwender stehen verschiedene web-basierte Bedienoberflächen zur Verfügung, die ihm die Funktionalität des Diagnosesystem in einer für ihn geeigneten Darstellung präsentieren. Für die Bedienung des Systems ist es unerheblich, ob sich der Benutzer lokal an der Anlage oder an einem anderen Ort befindet.

Die vom Benutzer gewünschten Funktionen werden von den Benutzeroberflächen an den Diagnose-Rechnerknoten weitergeleitet. Hier ist jede Funktionalität, die in der Oberfläche zur Verfügung steht, implementiert. Weiter übernimmt der Diagnose- Rechnerknoten die Speicherung von allen anfallenden Daten in der Datenbank DB. Alle anlagenspezifischen Daten wie z.B. die Anlagenkonfiguration oder Bauteildatenbanken, alle diagnosespezifischen Daten wie z.B. Langzeitaufzeichnungen oder Ringspeicherdaten sowie anwendungsbezogene Daten werden in der Datenbank DB verwaltet.

Werden von der Steuerung oder vom Leitstand beispielsweise einer Druckmaschine für die Diagnose relevante Informationen zur Verfügung gestellt, können sie durch spezielle in dem Diagnose-Rechnerknoten integrierte Komponenten weiterverarbeitet werden.

Die von der Bedienoberfläche am Diagnose-Rechnerknoten eingehenden Aufträge werden dort verarbeitet und in für die entsprechenden Regler verständliche Befehle umgesetzt. Die Kommunikation zwischen Diagnose-Rechnerknoten und Kommunikations-Rechnerknoten mit angeschlossenem Regler erfolgt über Ethernet und darauf aufsetzende XML-Protokolle. Am Kommunikations-Rechnerknoten werden die vom Application-Server empfangenen Aufträge ausgeführt und das Ergebnis an den Diagnose-Rechnerknoten zurückgeschickt.

Jeder der unterstützten Prozessrechnerknoten, beispielsweise Regler, muss eine xml-basierte Schnittstelle bieten, um dem Diagnose-Rechnerknoten den Zugriff auf die benötigten Daten zu ermöglichen. Dies kann z.B. mit Hilfe eines Kommunikations-Rechnerknotens ("Kommunikations-PC") realisiert werden, der entweder im Prozess-Rechnerknoten integriert ist (z.B. b maXX 4600) oder dem Prozess-Rechnerknoten als Einsteckkarte zugefügt wird. Alternativ kann die xml-basierte Schnittstelle des Prozess-Rechnerknotens auch ohne Kommunikations-PC-Hardware als Teil des Diagnose-Rechnerknoten laufen. Die Kommunikation zwischen den Schnittstellen-Modulen auf dem Diagnose-Rechnerknoten und der Prozess-Rechnerknoten-Hardware erfolgt dann über proprietäre Protokolle und RS232 oder Ethernet.

Die eingangs genannten Anforderungen bedingen eine komponentenbasierte, verteilte Architektur des Diagnosesystems. Gemäß den allgemeinen Grundsätzen der Softwareentwicklung werden die Datenerfassung, die Datenverarbeitung und - speicherung und die Benutzeroberflächen modularisiert und voneinander getrennt. Dadurch wird eine übersichtliche und besser skalierbare Struktur erreicht, die leicht um weitere Funktionalitäten erweitert werden kann. Hierdurch kann gewährleistet werden, dass das Diagnosesystem mit steigender Anzahl von Antrieben "mitwächst" (Skalierbarkeit). Durch die Verwendung von Ethernet und TCP/IP für die Kommunikation zwischen den Kommunikations-PCs, dem Diagnose-Rechnerknoten und den Anwendungen steht eine wesentlich höhere Bandbreite zur Datenübertragung zur Verfügung. Daraus resultiert ein im Vergleich zur eingangs genannten DE 196 14 748 wesentlich schnelleres Diagnosesystem.

Weiter erleichtert die komponentenbasierte Struktur den großen Funktionsumfang des Diagnosesystems abzudecken. Für jede Benutzergruppe kann eine eigens auf die Bedürfnisse zugeschnittene Bedienoberfläche entwickelt werden, die auf die darunter liegende Infrastruktur (Diagnose-Rechnerknoten) zugreift.

Durch die Trennung von Bedienoberfläche und Implementierung der Funktionalität im Diagnose-Rechnerknoten können neue Anwendungen zukünftig mit weniger Aufwand entwickelt werden. Durch Nutzung moderner Softwaretechnologien kann das Internet als weltweit verfügbares und akzeptiertes Kommunikationsmedium genutzt werden. Damit ist es unerheblich, ob die Überwachung der Anlage lokal vor Ort oder von einem anderen Ort, wie z.B. dem Servicebüro durchgeführt wird. Durch die Nutzung von gängigen Internetbrowsern für die Benutzeroberflächen wird der Installationsaufwand beim Anwender wesentlich reduziert und die Hürde für den Anwender das Diagnosesystem zu benutzen deutlich herabgesetzt.

Die komponentenbasierte Architektur ermöglicht weiterhin die Unterstützung von neu entwickelten Verfahren zur Überwachung und Diagnose von Antrieben, indem neue Funktionen als Komponente in den Diagnose-Rechnerknoten eingebunden werden.

Wesentliche Vorteile des erfindungsgemäßen Diagnosesystems bestehen insbesondere in folgendem:
(1) Der Kunde hat durch die Weboberfläche einen universellen Zugriff auf die Diagnosefunktionen:
   - Die richtige Information zeitnah am richtigen Ort
   - Einfache Bedienoberfläche durch Webbrowser
   - Benutzerführung erleichtert die Bedienung und Konfiguration
   - Die Web-Oberfläche ist plattformunabhängig
   - Bedienung über das Internet möglich, sofern gewünscht
(2) Der Kunde bekommt für ihn aufbereitete Informationen über den Zustand der Anlage:
   - Informationsaufbereitung in Form von graphische Darstellungen
   - Vorbeugende Diagnose
(3) Die wesentlich erweiterten Diagnosemöglichkeiten ermöglichen:
   - Erweiterte Überwachung der Anlage
   - Einfachere Lokalisierung der Ursache im Fehlerfall
(4) Die Funktionen zur Inbetriebnahmeunterstützung ermöglichen:
   - Schnellere Inbetriebnahme → Kostenreduzierung
   - Erhöhte Qualität der Inbetriebnahme durch definierte und dokumentierte Abnahmeprotokolle

Eine Funktionsgruppe Softwareupdate ermöglicht das Installieren oder Aktualisieren einer Firmware des Prozess-Rechnerknotens beispielsweise zur Firmware. Alle durchgeführten Aktionen in dieser Funktionsgruppe werden in einem Logfile erfasst. Voraussetzung für die Installation oder Aktualisierung der Firmware ist, dass die ausgewählten Regler eine eindeutige Reglerkennung besitzen. Folgende Aktionen müssen möglich sein:
1. Antriebe auswählen
   Der Benutzer wählt die zu aktualisierenden Antriebe aus eine Antriebsliste aus.
2. Firmware auswählen
   Der Benutzer wählt die Firmware, die auf die zu aktualisierenden Antriebe geladen werden soll aus.
3. Durchführen des Softwareupdates
   Nach der Anzeige eines Warnhinweises wird das Softwareupdate durchgeführt.

Eine Funktionsgruppe "Events konfigurieren" bietet die Möglichkeit, beliebige Ereignisse in der Ereignisanzeige und im Logbuch aufzuzeichnen. Der im Kommunikations-PC des jeweils Prozess-Rechnerknotens vorhandene Event(Ereignis)-Broker wird mit Hilfe der unter genannten Funktionen konfiguriert, so dass er die gewünschten Parameterkombinationen auf das Eintreten des konfigurierten Ereignisses überwacht. Beim Eintreten des Ereignisses wird es an den Diagnose- Rechnerknoten geschickt und dort in der Ereignisanzeige angezeigt. Folgende Aktionen können beispielsweise möglich sein:
1. Antriebe auswählen
   Der Benutzer wählt die Antrieb aus, für die ein Event konfiguriert oder gelöscht werden soll.
2. Event konfigurieren
   Der Benutzer konfiguriert ein Ereignis mit Hilfe eines Konfigurations-Wizards
3. Event löschen
   Der Benutzer löscht einen Event aus eine Liste mit laufenden Events. Standardmäßig vorhandene Events, wie z.B. Fehler können nicht gelöscht werden.
4. Eventkonfiguration zum Antrieb schicken
   Der Benutzer schickt den konfigurierten Event zu einer Antriebsauswahl und aktiviert ihn.

Eine Funktionsgruppe "Skripte" bietet die Möglichkeit komplexe Diagnosefunktionen durchzuführen. Um komplexe Abfragen von Parametern zu realisieren können PERL-Skripte geschrieben werden, die auf den entsprechenden Kommunikations-PC geschickt werden und dort ausgeführt werden. Folgende Aktionen sollen möglich sein:
1 Laden des Skripts auf den Server
   Der Benutzer lädt das Skript von dem Kommunikations-PC eines Antriebs auf den Server.
2 Laden des Skripts zum Antrieb
   Der Benutzer lädt ein aus einer Liste ausgewähltes Skript auf einen ausgewählten Antrieb.
3 Skript editieren
   Der Benutzer editiert ein Skript.
4 Ausführen des Skripts auf dem Kommunikations-PC
   Der Benutzer startet das Skript auf einem Antrieb.

Nachfolgend wird ein Überblick über die Architektur des Diagnose-Rechnerknotens des Diagnosesystems gegeben. Figur 1 zeigt eine detaillierte Struktur des Diagnosesystems Sie besteht im wesentlichen aus drei Ebenen:

### Client-Rechnerknoten mit Bedienoberflächen:

Alle Funktionalitäten des Diagnosesystems können über die Bedienoberflächen bedient werden. Für den Benutzer des Diagnosesystems soll es keinen Unterschied machen, ob er sich im lokalen Netz an der Anlage befindet oder über das Internet oder eine Telefon-Einwahlverbindung mit dem Application-Server verbunden ist.

### Diagnose-Rechnerknoten

Dieser stellt den Kern der gesamten Anwendung dar. Seine Funktionalität ist in verschiedene Komponenten (Manager) unterteilt. Jeder Manager ist in sich abgeschlossen und stellt seine Funktionalität der webbasierten Bedienoberfläche oder anderen Serverkomponenten zur Verfügung. Alle für die Funktion des Managers notwendigen Daten werden in der angeschlossenen Datenbank gespeichert. Um die Kapselung und Konsistenz dieser Daten zu gewährleisten kann auf diese Datenbestände nur über die vom Manager zur Verfügung gestellten Funktionen zugegriffen werden. Dadurch wird auch sichergestellt, dass eine Änderung an der Datenbankstruktur eines Managers nicht unbedingt Änderungen an anderen Managern nach sich zieht.

Um die Funktionalitäten der Manager den Bedienoberflächen zur Verfügung zu stellen muss eine geeignete Infrastruktur geschaffen werden. (Tomcat Servlet-Container) Für die Kommunikation mit der Weboberfläche zur Inbetriebnahme, Überwachung und Diagnose soll ein Apache Webserver eingesetzt werden. Dieser stellt HTML-Seiten zur Verfügung, in die Java-Applets eingebettet sind. Die auf der Oberfläche anzuzeigenden Daten werden mit Hilfe von Soap (Simple Object Application-Protokoll) zu den entsprechenden Modulen übertragen. Die Benutzeroberfläche ruft z.B. eine Funktion des Anlagen-Managers auf. Die zu übergebenden Parameter und die Bezeichnung der Funktion wird mit Hilfe des Soap Protokolls auf das Intra- oder Internet geschickt. Um die Transparenz gängiger Firewalls zu gewährleisten, wird der Funktionsaufruf in Form eines HTTP-Telegramms verschickt. Ein Webserver auf der Seite des Application-Servers empfängt die HTTP-Telegramme mit dem Soap-Inhalt und leitet sie an den Soap-Handler weiter. Der Soap-Handler im Tomcat-Servlet Container decodiert die Anfrage und ruft die gewünschte Funktion aus dem Anlagen-Manager auf. Die Funktion wird ausgeführt und die Rückgabewerte wiederum in das Soap Protokoll umgesetzt und als HTTP-Telegramm an die Oberfläche geschickt.

Eine wesentliche Eigenschaft eines Diagnose- und Überwachungssystems ist, dass der Benutzer über an der Anlage auftretende Ereignisse zeitnah informiert wird. Dies stellt für die oben gezeigte Architektur eine Schwierigkeit dar, da sowohl für die Kommunikation über Soap als auch für die HTML-Seiten eine ereignisbasierte Benachrichtigung nicht vorgesehen ist. Als Abhilfe müssen an der Anlage auftretende Ereignisse, wie z.B. das Auftreten eines Fehlers oder das Update eines Parameterwertes in einer Oberfläche, über einen Event-Kanal den Benutzeroberflächen mitgeteilt werden oder ständig gepollt werden.

### Prozessrechner-Knoten

Die Prozess-Rechnerknoten-Ebene stellt dem Diagnose-Rechnerknoten die Daten von den Prozess-Rechnerknoten zur Verfügung. Es soll der Prozess-Rechnerknoten angebunden werden. Wie bereits angedeutet, besteht der Diagnose-Rechnerknoten aus verschiedenen gekapselten Serverkomponenten (Manager), die ihre Funktionalitäten über den Tomcat-Servlet-Container der Benutzeroberfläche beziehungsweise Client-Rechnerknoten zur Verfügung stellen. Durch die komponentenbasierte Struktur soll sichergestellt werden, dass der Funktionsumfang des Diagnosesystems erweitert werden kann. Die Manager sind als Java-Komponenten realisiert. Im Folgenden werden die einzelnen Manager beschrieben.

Der Anlagen-Manager enthält alle notwendigen Daten über die Konfiguration der Anlage. Dies beinhaltet Daten über die in der Anlage vorhandenen Komponenten, Gruppierung der Komponenten, Adressen etc. Es sollen Funktionalitäten zur Verfügung gestellt werden, die die Darstellung der Anlagenkonfiguration in Form verschiedener Übersichtsbilder erlauben. Weiterhin sollen alle Dokumentationen zu den in der Anlage enthaltenen Daten zur Verfügung gestellt werden.

Beim Entwurf des Anlagen-Managers ist darauf zu achten, dass mit Hilfe der Funktionalitäten dieser Komponente beliebige Anlagen im Bereich der Antriebstechnik beschrieben werden können.

Der Ereignis-Manager verwaltet alle im Diagnosesystem auftretenden Ereignisse wie z.B. Fehlermeldungen oder Wartungsereignisse. Er sammelt alle aufgetretenen Ereignisse in Form von Logbüchem und stellt sie dem Benutzer in einer konfigurierbaren Darstellung zur Verfügung. Weiterhin besitzt der Ereignis-Manager Funktionen mit deren Hilfe beliebige Ereignisüberwachungen definiert werden können, die dann vom Ereignis-Manager auf den entsprechenden Reglern konfiguriert werden.

Der Aufzeichnungs-Manager stellt Funktionen zur Verfügung mit deren Hilfe beliebige Parameter von beliebigen Reglern aufgezeichnet werden können. Er bietet verschiedene Aufzeichnungstypen die von Benutzer konfiguriert werden können. Alle bei einer Aufzeichnung anfallenden Daten werden vom Aufzeichnungs-Manager in einer Datenbank gespeichert und auf Anforderung hin anderen Modulen, wie z.B. einem Graphik-Modul der Oberfläche zur Verfügung gestellt.

Alle Funktionalitäten im Diagnosesystem sind gegen unautorisierten Zugriff geschützt. Jeder Benutzer hat eine Benutzerkennung und gehört zu einer Benutzergruppe, die ihm ein Rechteprofil für den Zugriff auf die Funktionalitäten der Manager ermöglicht. Diese Informationen werden im Benutzer-Manager konfiguriert und abgespeichert. Jede Funktion in den Managern hat eine eindeutige Kennung. Will ein Benutzer auf eine Funktion zugreifen, wird zunächst am Benutzer-Manager nachgefragt ob der Benutzer die entsprechenden Rechte für das Ausführen dieser Funktion besitzt. Die Datenbank in der die Benutzerdaten abgelegt werden soll durch Verschlüsselung vor unberechtigtem Zugriff geschützt werden.

Der Logging-Manager sammelt alle Logging-Daten von den angeschlossenen Reglern und speichert derern Log- und Debug-Nachrichten in einer Datenbank oder in rollierenden Logfiles ab.

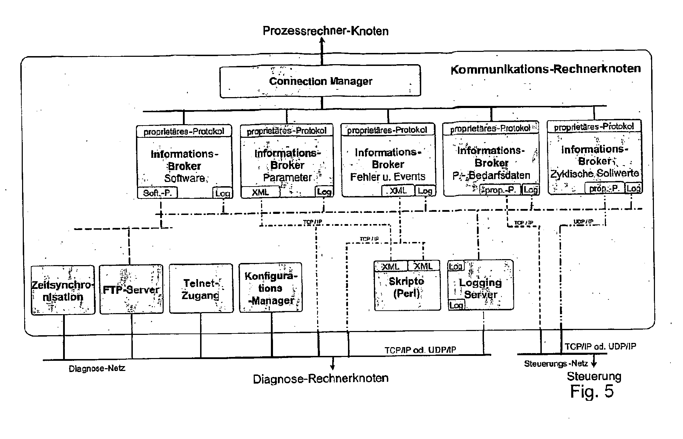

Der Kommunikations-Rechnerknoten beziehungsweise Kommunikations-PC gemäß Figur 5 übernimmt die Kommunikationsaufgaben zwischen dem Prozess-Rechnerknoten und der Außenwelt. Nachfolgend wird die Softwarestruktur für die Kommunikation zum Prozess-Rechnerknoten beschrieben.

Jedes Gerät, das mit dem Prozess-Rechnerknoten kommunizieren soll, muss ihn über eine geeignete Software-Schnittstelle auf dem Kommunikations-PC ansprechen. Mit Hilfe des Kommunikations-PCs kann beinahe jede Software-Schnittstelle, die auf Ethernet oder einer seriellen Schnittstelle basiert, realisiert werden. Nachfolgend wird die Softwarearchitektur auf dem Kommunikations-PC beschrieben. Eine Einordnung in das Gesamtkonzept ist den obigen Ausführungen zu entnehmen. Die Figur 5 zeigt die Softwarestruktur auf dem Kommunikations-PC beziehungsweise ProzessRechnerknoten.

Jede Funktionalität, die vom Prozess-Rechnerknoten der Außenwelt zur Verfügung gestellt werden soll, ist in einem Softwaremodul (Informations-Broker oder Manager) realisiert. Z.B. stellt der Informations-Broker "Parameter" eine Parameterschnittstelle zur Verfügung über die beliebige Parameter des Prozess-Rechnerknotens gelesen und geschrieben werden können. Der Informations-Broker "Fehler und Events" stellt beliebige Ereignisse und Fehler nach außen dar. Die beiden Informations-Broker "Parameter-Bedartsdaten" und zyklische Sollwerte" erledigen die Kommunikation mit der Steuerung. Sie sind nur auf den Reglern vorhanden, die den Master im Sercos-Ring bilden und somit mit der Steuerung kommunizieren müssen. Der Informations-Broker "Software-Download" stellt Funktionen für einen automatischen Up- und Download der Regler-Firmware bereit. Ein (nicht gezeichneter) Parameter-Manager dient zur internen Verwaltung der Reglerparameter auf der Flashkarte. Er ist für die Kommunikation mit der Außenwelt nicht relevant.

Die Kommunikation der Informations-Broker "Parameters", "Fehler und Event" sowie "Softwaredownload" mit der Außenwelt erfolgt über XML-basierte Protokolle. Alle Anfragen bzw. Antworten werden in, mit Hilfe eines XML-Schemas definierten, XML-Nachrichten übertragen.

Jeder der vorhandenen Broker kann gleichzeitig mehrere Anfragen von einem oder verschiedenen Clients bearbeiten. Im Wesentlichen kommuniziert der Kommunikations-PC des Prozess-Rechnerknotens mit der Steuerung und dem Diagnose-Rechnerknoten. In der Kommunikation mit einer SPS-Steuerung muss sichergestellt werden, dass die Nachrichten in jedem Fall ohne unnötigen Zeitverzug an einem Prozessor des Prozess-Rechnerknotens verarbeitet werden, da sie für den Betrieb der Anlage von wesentlicher Bedeutung sind. Nachdem die Anfragen auf dem Prozessor des Prozess-Rechnerknoten nur sequentiell verarbeitet werden können, muss die Möglichkeit bestehen, Anfragen von der SPS-Steuerung vorrangig zu bearbeiten. Dies soll durch Vergabe von Prioritäten für die Anfragen sichergestellt werden. Jede Anfrage an einen der Broker am Kommunikations-PC ist mit einer Priorität versehen. Gemäß dieser Priorität wird die Anfrage bevorzugt oder nachrangig behandelt.

Neben den Informations-Brokern gibt es weitere, zum Teil optionale, Softwaremodule auf dem Kommunikations-PC:
- Ein Logging-Server empfängt Log- und Debugnachrichten von den Informations-Brokern und stellt sie der Außenwelt zur Verfügung.
- Ein Webserver bietet eine einfache Weboberfläche zur Bedienung und Konfiguration.
- Ein FTP-Server dient zum einfachen Up- und Download von Firmware auf den Prozess-Rechnerknoten.
- Ein Client zur Zeitsynchronisation sorgt für eine übereinstimmende Zeit auf allen Kommunikations-PCs einer Anlage.
- Mit Hilfe eines Perl-Interpreters können beliebige Skripte mit Diagnose- oder Steuerungsfunktionalitäten ausgeführt werden.
- Der Konfigurations-Manager erledigt das Starten wichtiger Dienste (z.B. automatische Konfiguration einer Ereignisüberwachung für einen Fehler im technisch-physikalischen Prozess) sowie die Verwaltung der Konfigurationsdaten der einzelnen Softwaremodule.
- Ein Telnet-Zugang steht für Wartungszwecke zur Verfügung.

Im Folgenden werden die Softwaremodule des Kommunikations-PCs bechrieben.

Aufgabe des Informations-Brokers "Parameter" ist die Bereitstellung einer XML-basierten Parameterschnittstelle für den Zugriff auf die Parameter des Prozess-Rechnerknotens. Als Protokoll kommt ein mit Hilfe eines XML-Schemas definiertes xml-basiertes Protokoll zum Einsatz, welches über TCP/IP mit dem Client kommuniziert. Aus der Sicht des Clients sollen folgende Funktionen gegeben sein:

### Lesen von Parametern

Der Informations-Broker "Parameter" soll eine Gruppe von beliebigen Parametern vom Prozessor des Prozess-Rechnerknotens lesen können. Hierbei soll neben dem einmaligen Lesen ein zyklisches Lesen von Parametern möglich sein. Das Intervall zwischen den Lesevorgängen und die Anzahl der Lesevorgänge sollen vom Client einstellbar sein.

### Schreiben von Parametern

Der Informations-Broker "Parameter" soll eine Gruppe von beliebigen Parametern auf den Prozess-Rechnerknoten schreiben können.

Aufgabe des Informations-Brokers "Fehler und Events" ist die Bereitstellung einer xml-basierten Schnittstelle über die ein Client über am Regler auftretende Ereignisse informiert wird, ohne dass er ständig am Regler anfragen muss. Als Protokoll kommt ein mit Hilfe eines XML-Schemas definiertes xml-basiertes Protokoll zum Einsatz, welches über TCP/IP mit dem Client kommuniziert. Aus der Sicht des Clients sollen folgende Funktionen verfügbar sein:

### Konfigurieren einer Ereignisüberwachung

Am Informations-Broker "Event" soll es möglich sein, beliebige Eintrittsbedingungen für ein Ereignis zu definieren, bei deren Eintreten eine Nachricht an den Client verschickt wird. Falls das Ereignis eingetreten ist, sollen zusätzlich zu den an der Eintrittsbedingung beteiligten Parametern noch weitere Parameter vom Regler abgefragt werden können.
Ein erfolgreich entgegen genommener Auftrag soll vom Broker bestätigt werden.

Der Informations-Broker "Event" soll umfangreiche Funktionalitäten besitzen die dem Client weitreichende Möglichkeiten bieten, Eintrittsbedingungen zu bilden. Eine Eintrittsbedingung soll aus mehreren Teilbedingungen zusammengesetzt sein, die miteinander logisch UND oder ODER verknüpft werden können. Innerhalb jeder Teilbedingung kann der aktuell gelesene Wert des Parameters entweder mit einem, in der Konfigurationsnachricht mitgeschickten Vergleichswert oder mit dem letzten gelesenen Parameterwert verglichen werden. Optional soll ein Toleranzlimit berücksichtigt werden können, das mit dem Vergleichswert verrechnet wird. Es sollen für den Vergleich sowohl alle logischen Operatoren (<, >, <=, >=, !=) sowie der Vergleich mit einer Bitmaske realisiert werden. Zusätzlich soll für jede Teilbedingung ein Triggermodus berücksichtigt werden, der angibt, ob das Ereignis beim erstmaligen Eintreffen der Ereignisbedingung, beim Verschwinden einer bereits eingetretenen Bedingung oder in beiden Fällen gesendet werden soll.
Melden eines Ereignisses
Beim Eintreffen der konfigurierten Ereignisbedingung soll eine XML-Nachricht an den Client gesendet werden.

### Beenden einer Ereignisüberwachung

Mit Hilfe einer dafür vorgesehenen XML-Nachricht kann eine laufende Ereignisüberwachung beendet werden.

### Abfrage des Status einer Ereignisüberwachung

Mit Hilfe einer dafür vorgesehenen XML-Nachricht kann der Client beim Informations-Broker "Event" anfragen, ob eine Ereignisüberwachung läuft oder bereits beendet wurde.

Ein Unterschied zum Informations-Broker "Parameter" ist, dass zum Client keine permanente Socket-Verbindung besteht. Nach der Konfiguration des Events wird diese abgebaut und erst beim Auftreten des konfigurierten Events wieder aufgebaut. Hierfür muss auf der Seite des Clients ein entsprechender Server-Port zur Verfügung stehen.

Der Informations-Broker "Zyklische Sollwerte" erledigt einen Teil der Kommunikation mit der Steuerung. Er kommt insbesondere bei Druckmaschinen Anwendungen zum Einsatz, sofern es sich um einen Prozess-Rechnerknoten beziehungsweise Regler handelt, der Sercos-Master in einem Antriebsring ist.

Aufgabe des Informations-Brokers "Zyklische Sollwerte" ist es, den Regler in regelmäßigen Zeitintervallen mit neuen Sollwerten von der Steuerung zu versorgen. Dabei empfängt er die von der Steuerung gesendeten Telegramme und leitet sie an den Regler weiter. Er soll folgende Fähigkeiten besitzen:

### Empfang der Sollwert-Telegramme von einer oder mehreren Steuerungen

Der Informations-Broker "Zyklische Sollwerte" soll in der Lage sein, SollwertTelegramme von einer oder mehreren Steuerungen zu empfangen. Die Kommunikation mit der Steuerung kann über ein proprietäres Protokoll und/oder das Protokoll UDP/IP laufen.

### Weiterleitung der Sollwerte an den Regler

Alle von einer Steuerung SPS empfangenen Sollwerttelegramme sollen mit der höchsten Priorität an den Prozess-Rechnerknoten beziehungsweise Regler weitergeleitet werden.

### Monitoring der Sollwert-Telegramme

Für Diagnosezwecke soll es möglich sein, die ankommenden Telegramme von der Steuerung neben der Weiterleitung an den Regler zusätzlich auch an das Diagnosesystem weiterzugeben.

Der Informations-Broker "Parameter-Bedarfsdaten" erledigt einen Teil der Kommunikation mit der Steuerung. Er kommt insbesondere bei Druckmaschinen-Anwendungen zum Einsatz, sofern es sich um einen Prozess-Rechnerknoten oder Regler handelt, der Sercos-Master in einem Antriebsring ist.

Aufgabe des Informations-Brokers "Parameter-Bedarfsdaten" ist es einer oder mehreren Steuerungen beliebige Parameterwerte zeitnah zur Verfügung zu stellen. Er soll folgende Fähigkeiten besitzen:

### Lesen von Parametern

Ein Steuerungsclient schickt beliebige Parameter in einem Anforderungstelegramm an den Informations-Broker. Dieser fragt die Parameterwerte mit einer hohen Priorität vom Regler ab und sendet ein Antworttelegramm an den Steuerungsclient zurück. Für die Kommunikation mit dem Steuerungsclient kann ein proprietäres Protokoll und/oder TCP/IP zum Einsatz kommen.

### Monitoring der Anforderungstelegramme

Für Diagnosezwecke soll es möglich sein, die ankommenden Telegramme von der Steuerung neben der Weiterleitung an den Prozess-Rechnerknoten oder Regler zusätzlich auch an das Diagnosesystem weiterzugeben.

Aufgabe des Informations-Brokers "Softwaredownload" ist die Übertragung der Reglerfirmware sowie kompletter Datensätze zwischen dem Diagnose-Rechnerknoten und dem Regler. Die Übertragung der Daten erfolgt mit Hilfe des ftp-Protokolls. Er soll folgende Fähigkeiten besitzen:

### Download einer Reglerfirmware auf den Regler als Prozess-Rechnerknoten

Der Download von Reglerfirmware erfolgt in zwei Schritten: Zunächst wird mit Hilfe eines ftp-Clients die Firmware in ein Verzeichnis auf der Flashkarte des Kommunikations-PCs übertragen. Im zweiten Schritt wird der Informations-Broker "Softwaredownload" mit Hilfe eines XML-Telegramms angewiesen die Booteinstellungen des Reglers so zu verändern, so dass beim nächsten Booten des Reglers die neue Firmware gestartet wird.

### Upload einer Reglerfirmware vom Regler als Prozess-Rechnerknoten

Der Upload einer Reglerfirmware erfolgt direkt über das ftp-Protokoll. Hierbei ist keine Unterstützung von Seiten des Informations-Brokers "Softwaredownload" notwendig.

### Download eines kompletten Datensatzes

Wie beim Download einer Reglerfirmware erfolgt auch der Download eines Parameter-Datensatzes in zwei Schritten:
Zunächst wird mit Hilfe eines ftp-Clients der Datensatz in ein Verzeichnis auf der Flashkarte des Kommunikations-PCs übertragen. Im zweiten Schritt wird der Informations-Broker "Softwaredownload" mit Hilfe eines XML-Telegramms angewiesen die Einstellungen des Reglers so zu verändern, so dass beim nächsten Booten des Reglers der neue Datensatz berücksichtigt wird.

### Upload eines kompletten Datensatzes

Der Upload eines Datensatzes erfolgt direkt über das ftp-Protokoll. Hierbei ist keine Unterstützung von Seiten des Informations-Brokers "Softwaredownload" notwendig.

Aufgabe des Connection-Managers ist es, die Schnittstelle zum Regler beziehungsweise Prozess-Rechnerknoten zu verwalten. Hierbei soll es möglich sein, verschiedene physikalische Schnittstellen zu verwalten. (z.B. seriell, Ethernet oder SPI) Jede Anfrage an den Connection-Manager ist mit einer von 5 Prioritätsstufen versehen. Anfragen mit der höchsten Priorität werden vom Connection-Manager vor allen weiteren anstehenden Anfragen an den (digitalen Signal-)Prozessor Prozess-Rechnerknotens geschickt. Anfragen mit niedriger Priorität werden immer nach allen anderen anstehenden Aufträgen behandelt. Hierdurch kann sichergestellt werden, dass ein Auftrag mit höchster Priorität -z.B. von der Steuerung- in jedem Fall als nächste Anfrage auf dem Prozess-Rechnerknotens bearbeitet wird.

Im Prozess-Rechnerknoten ist als Speichermittel eine Flash-Karte aufgrund der besseren Unterstützung durch den Intel PXA 255 dem Kommunikations-PC zugeordnet. Trotzdem muss für den Prozess-Rechnerknoten beziehungsweise Regler eine Möglichkeit bestehen Parameter von der Flash-Karte zu lesen sowie auf die Flash-Karte zu schreiben. Dies wird mit Hilfe des Parameter-Managers gewährleistet.

### Weitere Dienste auf dem Kommunikations-PC

### Logging Servers

Alle Meldungen, die in den Informations-Broker-Prozessen erzeugt werden, werden formatiert und an die Konsole, in ein Logfile oder eine Nachrichtenwarteschlange des Log-Servers geschrieben. Von diesem Log-Server können die Nachrichten dann zu beliebigen Servern / Rechner verschickt werden.

Um die spätere automatische Auswertung der Logfiles zu ermöglichen, werden verschiedene Nachrichtentypen definiert, die die Interpretation der Nachrichten erleichtern. (z.B. Debug, Daten, Error ...)

### Skriptunterstützung

Mit Hilfe der Skriptunterstützung auf dem Kommunikations-PC soll eine flexible und frei programmierbare Schnittstelle geschaffen werden, mit der auch zukünftige Anforderungen an Überwachung und Diagnose abgedeckt werden sollen. Mit Hilfe eines Perl-Interpreters können beliebige Skripte auf dem Kommunikations-PC ablaufen, die auf die Funktionalitäten der. Informations-Broker "Parameter" und "Fehler und Events" zugreifen. So können komplexere Überwachungsfunktionen lokal auf dem Kommunikations-PC ausgeführt werden ohne daß eine Belastung des Netzwerks durch Übertragung von Daten stattfindet. Die Skripte werden mit Hilfe des ftp-Servers auf dem Kommunikations-PC übertragen oder sind dort schon als Teil der Software vorhanden.

Wegen der hohen Anforderungen an Performance und Systemressourcen des Kommunikations-PCs soll die Skriptunterstützung nur für spezielle Diagnoseaufgaben verwendet werden.

### Zeitsynchronisation, FTP-Server, Telnet

Für die Synchronisierung der Systemzeiten sollen alle Kommunikations-PCs ihre Systemzeit regelmäßig über einen auf dem BAUDIS Server laufenden Zeitserver synchronisieren.

Der FTP-Server und der Telnet-Zugang dienen für das Software-Update des Kommunikations-PCs und zur Wartung.

Während des Betriebs des Antriebssystems entstehende Diagnosedaten (z. B. Fehler oder Diagnoseinformationen wie z. B. Temperatur, Geschwindigkeit, Schleppfehler, Regelabweichung) werden vom Kommunikations-PC auf dem Prozessrechnerknoten bzw. Antriebsregler gepollt und in ein xml-basiertes Protokoll umgewandelt. Der Kommunikations-PC stellt die Diagnosedaten ereignisbasiert (Informations-Broker "Event") oder anfragebasiert (Informations-Broker "Parameter") dem Diagnoserechnerknoten zur Verfügung.

In den Managern des Diagnoserechnerknotens werden die Diagnosedaten von den Kommunikations-PCs der Antriebsregler geholt bzw. ereignisbasiert empfangen und weiterverarbeitet (z. B. Abspeichern in der Datenbank, Umrechnen etc.). Sollen Diagnosedaten auf der Benutzeroberfläche angezeigt werden, leitet der Manager die Diagnosedaten an die entsprechende Komponente im Servlet Container weiter. Dort werden die Daten aufbereitet, so dass sie mit Hilfe von anfragenbasierter Kommunikation (Polling) oder mit Hilfe von ereignisbasierter Kommunikation (Event-Kanal) über die Datenfernverbindung zu den Java-Applets, die in der Benutzeroberflächen eingebettet sind, übertragen werden können.

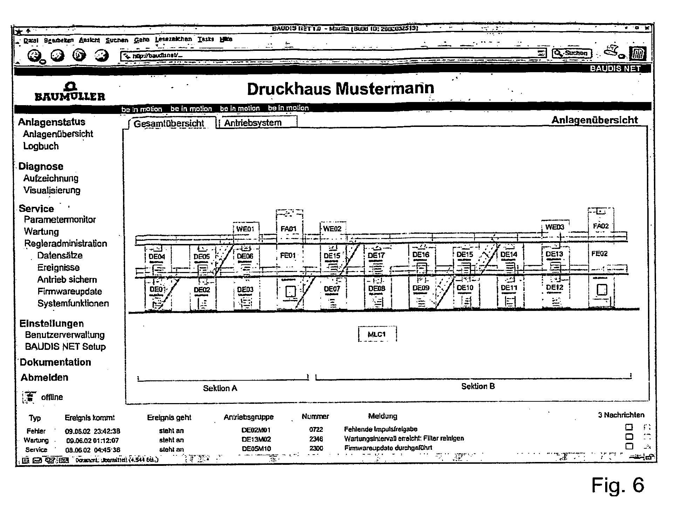

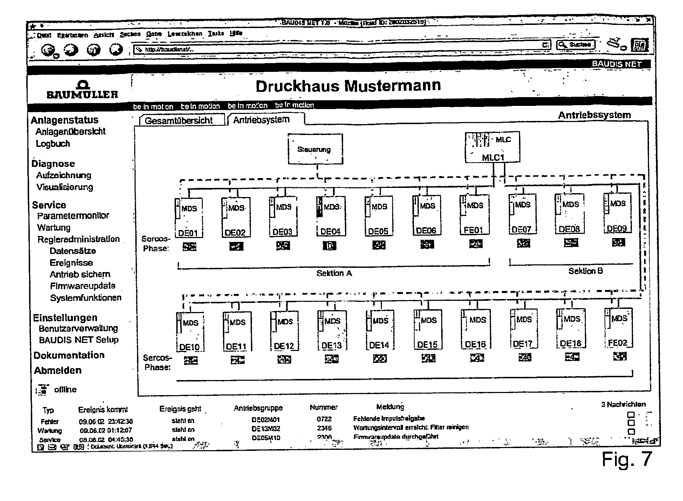

Figuren 6 und 7 zeigen webbasierte Bedienoberflächen, welche die benötigten Diagnose-Informationen für die Benutzer grafisch aufbereiten. Dadurch wird das erfindungsgemäße Diagnosesystem zu einem Instrument, das die Maschinenverfügbarkeit erhöht und auch komplexe Anlagen mit einer Vielzahl von Antrieben beherrschbar macht. So kann mit Bedienoberflächen nach Art des in Figur 7 und 8 gezeigten der Maschinenleitstand mit Daten für den aktuellen Maschinenstatus, oder die Produktionsleitung mit statistischen Daten zur Maschinenverfügbarkeit und zu Wartungszyklen versorgt werden. Aber auch der Maschinenhersteller oder der Antriebsausrüster kann auf eine Anlage mit einer Vielzahl physikalisch-technischer Prozesse so komfortabel zugreifen, um im Servicefall schnelle und effiziente Diagnose und Fehlerbeseitigung zu gewährleisten. Dies wird durch den Einsatz moderner Web-Technologien bzw. webbasierter Bedienoberflächen mit der ihnen innewohnenden Flexibilität ermöglicht. Vorteilhaft kann so die Weboberfläche auf jedem beliebigen Client-Rechner laufen, unabhängig vom jeweiligen Client-Betriebssystem. Eine Installation einer für das Diagnosesystem spezifischen Bedienoberfläche auf dem Client-Rechnerknoten entfällt. Die webbasierten Bedienoberflächen sind aufgrund der weiten Verbreitung durch das Internet vom Benutzer in gewohnter und damit leichter Weise bedienbar. Mit vertretbarem Aufwand kann die Bedienoberfläche an Kundenwünsche angepaßt werden (z. B. Sprachunterstützung).

### Bezugszeichenliste

- 1: Achse
- 2: Elektromotor
- 3: Wechselrichter
- 4: Prozessrechnerknoten
- 5: Kommunikationsrechnerknoten
- 6: Schaltschrank
- SPS: Steuerungsrechnerknoten

## Patentansprüche

1. Rechner-Netzwerk zur Konfiguration, Inbetriebnahme, Überwachung, Fehler-Diagnose und/oder -Analyse mehrerer technisch-physikalischer Prozesse, insbesondere elektrischer Antriebsvorgänge, die unter der Steuerung, Regelung und/oder Überwachung durch mehrere Prozessrechnerknoten (4) ablaufen, welche über wenigstens ein gemeinsames Kommunikationssystem mit wenigstens einem Diagnoserechnerknoten verbunden sind, in dem ein oder mehrere Konfigurations-, Überwachungs-, Diagnosedienste und/oder -funktionen implementiert sind, die den Prozessen und/oder den Prozessrechnerknoten (4) und/oder den darin ablaufenden Datenverarbeitungsprozessen zugeordnet sind, wobei das gemeinsame Kommunikationssystem mit dem Ethernet oder einem sonstigen, asynchron und/oder mit einem stochastischen Zugriffsverfahren arbeitenden Bus- oder Kommunikationssystem realisiert ist, **dadurch gekennzeichnet, dass** dem Ethernet oder dem sonstigen Bus- oder Kommunikationssystem und wenigstens einem der Prozessrechnerknoten (4) ein Kommunikationsrechnerknoten (5) zwischengeschaltet ist, der den Prozessrechnerknoten (4) an das Ethernet oder sonstige Bus- oder Kommunikationssystem anbindet, und der Kommunikationsrechnerknoten (5) als Zusatz-Baukomponente für den jeweiligen Prozessrechnerknoten (4) ausgebildet ist.

2. Netzwerk nach Anspruch 1, **dadurch gekennzeichnet, dass** der Kommunikationsrechnerknoten (5) zur anfrage- oder ereignisbasierten Kommunikation mit dem Diagnoserechnerknoten ausgebildet ist.

3. Netzwerk nach Anspruch 1 oder 2, **dadurch gekennzeichnet, dass** der Kommunikationsrechnerknoten (5) zur Kommunikation mit dem Diagnoserechnerknoten über XML-Protokolle und/oder als XML-basierte Schnittstelle ausgebildet ist.

4. Netzwerk nach einem der Ansprüche 1 bis 3, **dadurch gekennzeichnet, dass** zum jeweiligen Datenaustausch jedem Kommunikationsrechnerknoten (5) zumindest ein technisch-physikalischer Prozess oder ein Prozessrechnerknoten (4) zugeordnet ist.

5. Netzwerk nach einem der Ansprüche 1 bis 4, **dadurch gekennzeichnet, dass** wenigstens einer der Kommunikationsrechnerknoten (5) mit mehreren Prozessrechnerknoten (4) vorzugsweise über ein serielles Kommunikationssystem verbunden ist.

6. Netzwerk nach einem der Ansprüche 1 bis 5, **dadurch gekennzeichnet, dass** der Kommunikationsrechnerknoten (5) mit Funktionalitäten zur Fehlersuche oder Diagnose im Bereich wenigstens eines der Prozessrechnerknoten (4) und/oder technisch-physikalischen Prozesse versehen ist.

7. Netzwerk nach einem der vorangehenden Ansprüche, **dadurch gekennzeichnet, dass** der Diagnoserechnerknoten zur Bereitstellung oder Unterstützung webbasierter Bedienoberflächen insbesondere über Datenfernübertragung oder ein Weitverkehrsnetz ausgebildet und mit den Bedienoberflächen entsprechende Funktionskomponenten versehen ist.

8. Netzwerk nach einem der vorangehenden Ansprüche, **gekennzeichnet durch** eine Strukturierung entsprechend der Client/Server-Archftektur mit dem Diagnoserechnerknoten als Server.

9. Diagnoserechnerknoten für ein Netzwerk nach einem der Ansprüche 1 bis 8, ausgebildet als Server mit Schnittstellen zu wenigstens einer Datenbank, zur Kommunikation mit den Kommunikationsrechnerknoten (5) und/oder Prozessrechnerknoten (4) und sonstigen Client-Rechnerknoten, wobei die eine oder mehreren Schnittstellen zu den sonstigen Client-Rechnerknoten mit einem Servlet-Container realisiert sind, welcher der Übertragung von Diagnosedaten, die aus den Schnittstellen zur Kommunikation mit den Kommunikationsrechnerknoten (5) und/oder Prozessrechnerknoten (4) erhältlich sind, an die Clientknoten dient, und die eine oder mehreren Schnittstellen zu den Kommunikationsrechnerknoten (5) und/oder Prozessrechnerknoten (4) auf der Basis des Ethernet realisiert sind, **gekennzeichnet durch** einen Diagnosekanal, der gebildet ist mit folgendem:
mit einer oder mehreren der den Kommunikationsrechnerknoten (5) und/oder Prozessrechnerknoten (4) zugeordneten Ethernet-Schnittstellen;
mit einem Ereignis-Mangementmodul mit Datenbank-Zugriff, welches zur Verarbeitung der an den Ethernetschnittstellen erhaltenen Diagnosedaten ausgebildet ist;
mit einem auf der Basis des Servlet-Containers angelegten Ereignis-Überwachungsmodul, das Ausgangsdaten aus dem Ereignis-Managementmodul einem oder mehreren Applets auf externen Client-Rechnerknoten zur Verfügung stellt.

10. Diagnoserechnerknoten nach Anspruch 9, **dadurch gekennzeichnet, dass** dem Servlet-Container ein Webserver zur Generierung und Weiterübertragung von HTML-Seiten aus vom Servlet-Container erhaltenen Daten nachgeordnet ist.

11. Diagnoserechnerknoten nach Anspruch 9 oder 10, **dadurch gekennzeichnet dass** die Schnittstellen zur Kommunikation mit den Kommunikationsrechnerknoten (5) und/oder Prozessrechnerknoten (4) über XML-Protokolle, und/oder die Schnittstellen zur Kommunikation mit den Client-Rechnerknoten über das SOAP (Simple Object Process Protocol) eingerichtet sind.

12. Diagnoserechnerknoten nach einem der Ansprüche 9 bis 11, **gekennzeichnet durch** ein Anlagen-Managementmodul mit Informationsdaten über die Konfiguration der technisch-physikalischen Prozesse nebst zugehörigen Prozessrechnerknoten (4) und einer oder mehrerer Funktionskomponenten, die zur Visualisierung der Konfiguration in Verbindung mit den Client-Rechnerknoten und/oder zum Bereithalten der Informationsdaten für weitere Datenverarbeitungsprozesse ausgebildet sind.

13. Kommunikationsrechnerknoten (5) für das Netzwerk nach einem der Ansprüche 1 bis 8, **gekennzeichnet durch** eine erste, dem wenigstens einen Diagnoserechnerknoten zugeordnete Schnittstelle, welche zur Kommunikation über Protokolle der TCP/IP-Familie, einschließlich UDP/IP, vorzugsweise auf der
Basis des Ethernet programmiert ist, und **durch** eine oder mehrere zweite, einem oder mehreren der Prozessrechnerknoten (4) zugeordnete Schnittstellen, wobei die erste und die eine oder mehreren zweiten Schnittstellen miteinander koppelbar sind über einen oder mehrere Informationsbroker, die jeweils programm- und/oder schaltungstechnisch als Submodule zur bidirektionalen, anfrage- und/oder ereignisbasierten Datenkommunikation zwischen erster und zweiter(n) Schnittstelle(n) ausgebildet sind.

14. Kommunikationsrechnerknoten (5) nach Anspruch 13, **dadurch gekennzeichnet, dass** die erste Schnittstelle zur Kommunikation auf der Basis von XML-Protokollen ausgebildet ist.

15. Kommunikationsrechnerknoten (5) nach Anspruch 13 oder 14, **dadurch gekennzeichnet, dass** die zweite Schnittstellen zur Verbindung mit einem seriellen Kommunikationssystem ausgebildet ist.

16. Kommunikationsrechnerknoten (5) nach einem der Ansprüche 13 bis 15, **dadurch gekennzeichnet, dass** der eine oder die mehreren Informationsbroker eine oder mehrere Funktionskomponenten umfassen, die zur Fehlersuche oder Diagnose im Bereich der Prozessrechnerknoten (4) und/oder technisch-physikalischen Prozesse ausgebildet sind.

17. Kommunikationsrechnerknoten (5) nach einem der Ansprüche 13 bis 16, **dadurch gekennzeichnet, dass** mehrere Informationsbroker mit zueinander unterschiedlichen Funktionalitäten eingerichtet und mit einem Connection-Manager verbunden sind, der programm- und/oder schaltungstechnisch als Submodul zur Realisierung vorspezifizierter Prioritätsstufen ausgebildet ist, gemäß welcher mit der oder den zweiten Schnittstellen jeweils ein bestimmter der mehreren Informationsbroker verbindbar ist, die jeweils eine Kommunikationsanforderung an den oder die Prozessrechnerknoten (4) aufweisen.

18. Kommunikationsrechnerknoten (5) nach einem der Ansprüche 13 bis 17, **gekennzeichnet durch** einen Software-Informationsbroker zur bidirektionalen Übertragung von Firmware oder sonstigen Daten oder kompletten Datensätzen von der ersten zu der oder den zweiten Schnittstellen.

19. Kommunikationsrechnerknoten (5) nach Anspruch 18, **dadurch gekennzeichnet, dass** zwischen dem Software-Informationsbroker und der ersten Schnittstelle ein FTP (File Transfer Protocol) - Server zwischengeschaltet ist.

20. Kommunikationsrechnerknoten (5) nach einem der Ansprüche 13 bis 19, **gekennzeichnet durch** die Austattung mit einem nichtflüchtigen Schreib-/Lesespeicher, insbesondere Flash-Speicher, mit welchem einer oder mehrere der Informationsbroker in Verbindung steht.

21. Kommunikationsrechnerknoten (5) nach einem der Ansprüche 13 bis 20, **gekennzeichnet durch** einen Parameter-Informationsbroker zur Realisierung einer vorzugsweise XML-basierten Schnittstelle für Lesen und/oder Schreiben von Parametern in einem oder mehreren zugeordneten Prozessrechnerknoten (4).

22. Kommunikationsrechnerknoten (5) nach einem der Ansprüche 13 bis 21, **gekennzeichnet durch** einen Fehler/Ereignis-Informationsbroker, der zur Kommunikation mit einem XML-basierten Protokoll auf der Basis von TCP/IP über die erste Schnittstelle ausgebildet und mit einem von extern derart konfigurierbaren Prüf- und Triggerwerk versehen ist, dass bei Eintritt eines vorspezifizierten Ereignisses, beispielsweise Überschreitens eines Toleranzlimits, im Bereich des oder der Prozessrechnerknoten (4) und/oder technisch-physikalischen Prozesses selbsttätig eine korrespondierende Nachrichtenübermittlung zur ersten Schnittstelle ausgelöst wird.

23. Kommunikationsrechnerknoten (5) nach einem der Ansprüche 13 bis 22, **gekennzeichnet durch** die Einrichtung eines Interpreters für die Ablauffähigkeit von Skripten, die zum Zugriff auf Funktionselemente und/oder Informationsdaten in dem oder den Informationsbrokern zwecks Ausführung von Überwachungs- und Diagnosefunktionen ausgebildet sind.

24. Kommunikationsrechnerknoten (5) nach Anspruch 23, **dadurch gekennzeichnet, dass** der Interpreter mit einem mit der ersten Schnittstelle verbundenen FTP (File Transfer Protocol) - Server derart koppelbar ist, dass über die erste Schnittstelle empfangene Skripte ausführbar sind.

## Claims

1. A computer network for the configuration, installation, monitoring, error diagnosis and/or error analysis of plural technical-physical processes, in particular electric drive processes, which run under the control, regulation and/or monitoring by plural process computer nodes (4), which are connected via at least one shared communication system to at least one diagnosis computer node in which one or more configuration, monitoring, diagnosis service(s) and/or function(s) are implemented, which are allocated to the processes and/or the process computer nodes (4) and/or to the data processing operations running therein, whereas the shared communication system is realised by an Ethernet or another bus or communication system operating asynchronously and/or with a stochastic access method, **characterised in that** a communication computer node (5) is interconnected between the Ethernet or other bus or communication system and at least one of the process computer nodes (4), and connects the process computer node (4) to the Ethernet or other bus or communication system and that the communication computer node (5) is formed as an additional component for the respective process computer node (4).

2. A network according to claim 1, **characterised in that** the communication computer node (5) is formed for enquiry-based or event-based communication with the diagnosis computer node.

3. A network according to claim 1 or 2, **characterised in that** the communication computer node (5) is formed for communication with the diagnosis computer node via XML protocols and/or as an XML-based interface.

4. A network according to one of claims 1 to 3, **characterised in that** for each data exchange each communication computer node (5) is allocated to at least one technical-physical process or a process computer node (4).

5. A network according to one of claims 1 to 4, **characterised in that** at least one of the communication computer nodes (5) is connected to plural process computer nodes (4) preferably via a serial communication system.

6. A network according to one of claims 1 to 5, **characterised in that** the communication computer node (5) is provided with functionalities for an error search or diagnosis in a region of at least one of the process computer nodes (4) and/or technical physical processes.

7. A network according to one of the preceding claims, **characterised in that** the diagnosis computer node is formed for delivering or supporting web-based user interfaces in particular via data remote transmission or a long-distance traffic network and is provided with the function components corresponding to the user interfaces.

8. A network according to one of the preceding claims, **characterised by** a structure corresponding to the client/server architecture with the diagnosis computer node as server.

9. Diagnosis computer node for a network according to one of claims 1 to 8, wherein the diagnosis computer node is formed as a server with interfaces to at least one database, for communication with the communication (5) and/or process computer nodes (4) and other client computer nodes, wherein the one or more interfaces to the other client computer nodes are formed with a Servlet container, which provides transmission of diagnosis data obtainable from the interfaces for communication with the communication (5) and/or process computer nodes (4) to the client nodes, and the one or more interfaces to the communications (5) and/or process computer nodes (4) are realised on the basis of the Ethernet, **characterised by** a diagnosis channel, which is formed by:
one or more Ethernet interfaces allocated to the communication (5) and/or process computer nodes (4);
an event management unit with database access, which is formed for processing the diagnosis data obtained at the Ethernet interfaces; and
an event monitoring unit applied on the basis of the Servlet container, which makes available output data from the event management unit to one or more Applets on external client computer nodes.

10. Diagnosis computer node according to claim 9, **characterised in that** a web server for generating and forwarding data obtained from HTML pages by the Servlet container is connected downstream of the Servlet container.

11. Diagnosis computer node according to claim 9 or 10, **characterised in that** the interfaces are installed for communication with the communication (5) and/or process computer node (4) via XML protocols and/or the interfaces for communication with the client computer nodes via SOAP (Simple Object Process Protocol).

12. Diagnosis computer node according to one of claims 9 to 11, **characterised by** an appliance management unit having information data about the configuration of the technical-physical processes together with associated process computer nodes (4) and one or more function components, which are formed to visualise the configuration in combination with the client computer node and/or for keeping ready the information data for further data processing operations.

13. Communication computer node (5) for the network according to one of claims 1 to 8, **characterised by** a first interface which is allocated to the at least one diagnosis computer node which is programmed for communication via protocols of the TCP/IP family, including UDP/IP, preferably on the basis of the Ethernet, and by one or more second interfaces allocated to one or more of the process computer nodes (4), wherein the first and the one or more second interfaces may be coupled together via one or more information brokers, which are each formed by program and/or circuit technology as sub-units for bidirectional enquiry-based and/or event-based data communication between the first and second interface(s).

14. Communication computer node (5) according to claim 13, **characterised in that** the first interface is formed for communication on the basis of XML protocols.

15. Communication computer node (5) according to claim 13 or 14, **characterised in that** the second interface is formed for connection with a serial communication system.

16. Communication computer node (5) according to one of claims 13 to 15, **characterised in that** the one or more information brokers comprise one or more function components, which are formed for error search or diagnosis in a region of the process computer nodes and/or technical-physical processes.

17. Communication computer node (5) according to one of claims 13 to 16, **characterised in that** plural information brokers are installed with different functionalities and are connected to a connection manager, which is formed by program or circuit technology as a sub-unit for carrying out pre-determinable priority stages, according to which a specified one of the plural information brokers may be connected to the second interface(s) and each have a communication requirement at the process computer node(s) (4).

18. Communication computer node (5) according to one of claims 13 to 17, **characterised by** a software information broker for bidirectional transmission of firmware or other data or complete data records from the first to the second interface(s).

19. Communication computer node (5) according to one of claims 13 to 18, **characterised in that** an FTP (File Transfer Protocol) server is interconnected between the software information broker and the first interface.

20. Communication computer node (5) according to one of claims 13 to 19, **characterised by** the provision of a non-volatile write/read memory, in particular flashcard memory, with which one or more of the information brokers communicate.

21. Communication computer node (5) according to one of claims 13 to 20, **characterised by** a parameter information broker for realising an interface which is preferably XML-based for the reading and/or writing of parameters in one or more allocated process computer nodes (4).

22. Communication computer node (5) according to one of claims 13 to 21, **characterised by** an error/event information broker, which is formed for communication with an XML-based protocol on the basis of TCP/IP via the first interface and is provided with a test and trigger member which can be so configured from outside that if a predetermined event occurs, e.g. a tolerance limit is exceeded, in the region of the process computer node(s) (4) and/or of the technical-physical process, automatically a corresponding message transmission is released to the first interface.

23. Communication computer node (5) according to one of claims 13 to 22, **characterised by** the installation of an interpreter for the running of scripts which are formed for access to function elements and/or information data in the information broker(s) for the purpose of carrying out monitoring and diagnosis functions.

24. Communication computer node (5) according to claim 23, **characterised in that** the interpreter may be so coupled to an FTP (File Transfer Protocol) server connected to the first interface that scripts received via the first interface may be executed.

## Revendications

1. Réseau informatique pour la configuration, la mise en service, la surveillance, le diagnostic et/ou analyse d'erreurs de plusieurs processus technico-physiques, en particulier des processus d'entraînement électrique qui se déroulent sous la commande, régulation et/ou surveillance de plusieurs noeuds informatiques de processus (4) qui sont reliés, par l'intermédiaire d'au moins un système de communication commun, à au moins un noeud informatique de diagnostic dans lequel sont implémentés un ou plusieurs services et/ou fonctions de configuration, surveillance et diagnostic qui sont associés aux processus et/ou aux noeuds informatiques de processus (4) et/ou aux processus de traitement de données s'y déroulant, le système de communication commun étant réalisé avec Ethernet ou un autre système de bus ou de communication fonctionnant de manière asynchrone et/ou avec un procédé d'accès stochastique, **caractérisé en ce qu**'est intercalé entre Ethernet ou l'autre système de bus ou de communication et au moins l'un des noeuds informatiques de processus (4) un noeud informatique de communication (5) qui relie le noeud informatique de processus (4) à Ethernet ou l'autre système de bus ou de communication, et en ce que le noeud informatique de communication (5) est conçu en tant que composant additionnel du noeud informatique de processus (4) correspondant.

2. Réseau selon la revendication 1, **caractérisé en ce que** le noeud informatique de communication (5) est conçu pour la communication, basée sur des demandes ou événements, avec le noeud informatique de diagnostic.

3. Réseau selon la revendication 1 ou 2, **caractérisé en ce que** le noeud informatique de communication (5) est conçu pour la communication avec le noeud informatique de diagnostic via des protocoles XML, et/ou en tant qu'interface basée XML.

4. Réseau selon l'une des revendications 1 à 3, **caractérisé en ce qu'**au moins un processus technico-physique ou un noeud informatique de processus (4) est associé à chaque noeud informatique de communication (5) pour l'échange de données correspondant.

5. Réseau selon l'une des revendications 1 à 4, **caractérisé en ce qu'**au moins l'un des noeuds informatiques de communication (5) est relié à plusieurs noeuds informatiques de processus (4), de préférence par l'intermédiaire d'un système de communication série.

6. Réseau selon l'une des revendications 1 à 5, **caractérisé en ce que** le noeud informatique de communication (5) est pourvu de fonctionnalités de recherche d'erreurs ou de diagnostic dans la région d'au moins l'un des noeuds informatiques de processus (4) et/ou processus technico-physiques.

7. Réseau selon l'une des revendications précédentes, **caractérisé en ce que** le noeud informatique de diagnostic est conçu pour la mise à disposition ou le support d'interfaces utilisateur web, en particulier par télétransmission de données ou via un réseau étendu, et est pourvu de composants fonctionnels correspondant aux interfaces utilisateur.

8. Réseau selon l'une des revendications précédentes, **caractérisé par** une structuration selon l'architecture Client/Serveur avec le noeud informatique de diagnostic comme serveur.

9. Noeud informatique de diagnostic pour un réseau selon l'une des revendications 1 à 8, conçu en tant que serveur comportant des interfaces avec au moins une banque de données, pour la communication avec les noeuds informatiques de communication (5) et/ou les noeuds informatiques de processus (4) et autres noeuds informatiques client, la ou les interface(s) avec les autres noeuds informatiques client étant réalisée(s) avec un conteneur de servlets qui sert à la transmission de données de diagnostic aux noeuds client, lesquelles données sont accessibles à partir des interfaces de communication avec les noeuds informatiques de communication (5) et/ou les noeuds informatiques de processus (4), et la ou les interface(s) avec les noeuds informatiques de communication (5) et/ou noeuds informatiques de processus (4) étant réalisée(s) sur la base d'Ethernet, **caractérisé par** un canal de diagnostic constitué des éléments suivants :
une ou plusieurs des interfaces Ethernet associées aux noeuds informatiques de communication (5) et/ou noeuds informatiques de processus (4) ;
un module de gestion d'événements avec accès à la banque de données, lequel est conçu pour le traitement des données de diagnostic obtenues au niveau des interfaces Ethernet ;
un module de surveillance d'événements appliqué sur la base du conteneur de servlets, qui met à la disposition d'un ou plusieurs applets des données de sortie du module de surveillance d'événements sur des noeuds informatiques client externes.

10. Noeud informatique de diagnostic selon la revendication 9, **caractérisé en ce qu'**est placé en aval du conteneur de servlets un serveur Web destiné à générer et retransmettre des pages HTLM issues de données reçues du conteneur de servlets.

11. Noeud informatique de diagnostic selon la revendication 9 ou 10, **caractérisé en ce que** les interfaces de communication avec les noeuds informatiques de communication (5) et/ou noeuds informatiques de processus (4) sont mises en place via des protocoles XML, et/ou les interfaces de communication avec les noeuds informatiques client sont mises en place via le SOAP (Simple Object Process Protocol).

12. Noeud informatique de diagnostic selon l'une des revendications 9 à 11, **caractérisé par** un module de gestion d'équipements comportant des données d'information sur la configuration des processus technico-physiques, outre des noeuds informatiques de processus (4) correspondants et un ou plusieurs composants fonctionnels conçus pour la visualisation de la configuration en liaison avec les noeuds informatiques client et/ou pour tenir à disposition les données d'information d'autres processus de traitement de données.

13. Noeud informatique de communication (5) pour le réseau selon l'une des revendications 1 à 8, **caractérisé par** une première interface associée audit noeud informatique de diagnostic au moins au nombre de un, qui est programmée pour la communication via des protocoles de la famille TCP/IP, y compris UDP/IP, de préférence sur la base d'Ethernet ; et par une ou plusieurs secondes interfaces associées à un ou plusieurs des noeuds informatiques de processus (4), la première et la ou les seconde(s) interface(s) pouvant être couplées entre elles par l'intermédiaire d'un ou de plusieurs passeurs d'informations qui sont configurés respectivement, selon la technique de programmation et/ou de constitution des circuits, sous forme de sous-modules pour la communication de données bidirectionnelle, basée sur des demandes et/ou événements, entre la première et la ou les seconde(s) interface(s).

14. Noeud informatique de communication (5) selon la revendication 13, **caractérisé en ce que** la première interface de communication est conçue sur la base de protocoles XML.

15. Noeud informatique de communication (5) selon la revendication 13 ou 14, **caractérisé en ce que** la seconde interface est conçue pour la liaison avec un système de communication série.

16. Noeud informatique de communication (5) selon l'une des revendications 13 à 15, **caractérisé en ce que** le ou les passeur(s) d'informations comprennent un ou plusieurs composants fonctionnels conçus pour la recherche d'erreurs ou le diagnostic dans la région des noeuds informatiques de processus (4) et/ou des processus technico-physiques.

17. Noeud informatique de communication (5) selon l'une des revendications 13 à 16, **caractérisé en ce que** plusieurs passeurs d'informations ayant des fonctionnalités distinctes sont mis en place et reliés à un gestionnaire de connexion, lequel est conçu, selon la technique de programmation et/ou de constitution des circuits, en tant que sous-module pour la réalisation de niveaux de priorité préalablement spécifiés, selon lequel peut être relié à la ou aux secondes interfaces respectivement un passeur d'informations donné parmi la pluralité de passeurs d'informations qui présentent respectivement une demande de communication adressée au ou aux noeud(s) informatique(s) de processus (4).

18. Noeud informatique de communication (5) selon l'une des revendications 13 à 17, **caractérisé par** un passeur d'informations logicielles pour la transmission bidirectionnelle de micro-logiciels ou autres données ou ensembles de données complètes de la première à la ou aux secondes interfaces.

19. Noeud informatique de communication (5) selon la revendication 18, **caractérisé en ce qu'**un serveur FTP (File Transfer Protocol) est intercalé entre le passeur d'informations logicielles et la première interface.

20. Noeud informatique de communication (5) selon l'une des revendications 13 à 19, caractérisé en qu'est prévue une mémoire d'écriture/lecture non volatile, en particulier une mémoire flash, avec laquelle est lié l'un ou plusieurs des passeurs d'informations.

21. Noeud informatique de communication (5) selon l'une des revendications 13 à 20, **caractérisé par** un passeur d'informations paramétriques pour la réalisation d'une interface, de préférence basée sur XML, pour la lecture et/ou l'écriture de paramètres dans un ou plusieurs noeuds informatiques de processus (4) associés.

22. Noeud informatique de communication (5) selon l'une des revendications 13 à 21, **caractérisé par** un passeur d'informations d'erreur/événement qui est conçu pour la communication avec un protocole basé sur XML sur la base de TCP/IP via la première interface et est pourvu d'un mécanisme de contrôle et déclenchement pouvant être configuré de manière externe de façon telle qu'à l'apparition d'un événement préalablement spécifié, par exemple dépassement d'une limite de tolérance, dans la région du ou des noeuds informatiques de processus (4) et/ou de processus technico-physiques, une transmission de messages correspondante vers la première interface est déclenchée automatiquement.

23. Noeud informatique de communication (5) selon l'une des revendications 13 à 22, **caractérisé par** la mise en place d'un interprète pour l'exécutabilité de scripts qui sont conçus pour l'accès à des éléments fonctionnels et/ou données d'information dans le ou les passeurs d'informations à des fins d'exécution de fonctions de surveillance et de diagnostic.

24. Noeud informatique de communication (5) selon la revendication 23, **caractérisé en ce que** l'interprète peut être couplé à un serveur FTP (File Transfer Protocol) relié à la première interface, de façon telle que des scripts reçus via la première interface sont exécutables.
